(19) **Europäisches Patentamt**
**European Patent Office**
**Office européen des brevets**

(11) **EP 3 633 544 B1**

(12) **FASCICULE DE BREVET EUROPEEN**

(45) Date de publication et mention de la délivrance du brevet:
**20.12.2023 Bulletin 2023/51**

(21) Numéro de dépôt: **19306257.7**

(22) Date de dépôt: **02.10.2019**

(51) Classification Internationale des Brevets (IPC):
**G06F 18/243** *(2023.01)*      **G06N 3/045** *(2023.01)*
**G06V 10/764** *(2022.01)*      **G06V 20/52** *(2022.01)*
**G06N 3/08** *(2023.01)*       **G06V 40/10** *(2022.01)*
**G06V 40/16** *(2022.01)*

(52) Classification Coopérative des Brevets (CPC):
**G06N 3/08; G06F 18/24323; G06N 3/045;**
**G06V 10/764; G06V 20/52; G06V 40/103;**
**G06V 40/165**

(54) **PROCEDE D'ASSOCIATION D'ELEMENTS D'INTERET VISIBLES DANS UNE VIDEO**

ASSOZIATIONSVERFAHREN VON WICHTIGEN ELEMENTEN, DIE IN EINEM VIDEO ZU SEHEN SIND

METHOD FOR ASSOCIATION OF ELEMENTS OF INTEREST VISIBLE IN A VIDEO

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **03.10.2018 FR 1859158**

(43) Date de publication de la demande:
**08.04.2020 Bulletin 2020/15**

(73) Titulaire: **Idemia Identity & Security France**
**92400 Courbevoie (FR)**

(72) Inventeurs:
• **JOURDAS, Cécile**
**92400 Courbevoie (FR)**
• **CSILLAG, Dora**
**92400 Courbevoie (FR)**
• **THIEBAUT, Maxime**
**92400 Courbevoie (FR)**

(74) Mandataire: **Idemia**
**2, place Samuel de Champlain**
**92400 Courbevoie (FR)**

(56) Documents cités:
• HENSCHEL ROBERTO ET AL: "Fusion of Head and Full-Body Detectors for Multi-object Tracking", 2018 IEEE/CVF CONFERENCE ON COMPUTER VISION AND PATTERN RECOGNITION WORKSHOPS (CVPRW), IEEE, 18 juin 2018 (2018-06-18), pages 1509-150909, XP033475491, DOI: 10.1109/CVPRW.2018.00192
• JUNLIANG XING ET AL: "Multi-object tracking through occlusions by local tracklets filtering and global tracklets association with detection responses", 2009 IEEE CONFERENCE ON COMPUTER VISION AND PATTERN RECOGNITION : CVPR 2009 ; MIAMI [BEACH], FLORIDA, USA, 20 - 25 JUNE 2009, IEEE, PISCATAWAY, NJ, 20 juin 2009 (2009-06-20), pages 1200-1207, XP031607272, ISBN: 978-1-4244-3992-8
• WANG SHAOFEI ET AL: "Learning Optimal Parameters for Multi-target Tracking with Contextual Interactions", INTERNATIONAL JOURNAL OF COMPUTER VISION, KLUWER ACADEMIC PUBLISHERS, NORWELL, US, vol. 122, no. 3, 12 octobre 2016 (2016-10-12), pages 484-501, XP036213997, ISSN: 0920-5691, DOI: 10.1007/S11263-016-0960-Z [extrait le 2016-10-12]

**Description**

DOMAINE TECHNIQUE GENERAL

La présente invention concerne le domaine de l'apprentissage supervisé, et en particulier un procédé d'association d'éléments d'intérêt visibles dans une vidéo notamment en utilisant un réseau de neurones à convolution.

ETAT DE L'ART

Les réseaux de neurones sont massivement utilisés pour la classification de données.

Lors d'une phase d'apprentissage automatique (généralement supervisé, c'est-à-dire sur une base de données de référence déjà classifiées), un réseau de neurones « apprend » et devient tout seul capable d'appliquer la même classification à des données inconnues.

Les réseaux de neurones à convolution, ou CNN (Convolutional Neural Networks) sont un type de réseau de neurones dans lequel le motif de connexion entre les neurones est inspiré par le cortex visuel des animaux. Ils sont ainsi particulièrement adaptés à un type particulier de tâche qui est l'analyse d'image, ils permettent en effet avec efficacité la reconnaissance d'éléments d'intérêt tels que des objets ou des personnes dans des images, en particulier dans des applications de sécurité (surveillance automatique, détection de menace, etc.). Pour cela, on apprend le CNN sur des bases d'images d'apprentissage, c'est-à-dire des images dans lesquelles les éléments d'intérêt ont été déjà « annotés », c'est-à-dire mis en évidence et étiquetés avec la catégorie d'élément correspondant.

On connait tout particulièrement une utilisation des CNN pour faire ce que l'on appelle du « tracking », c'est-à-dire du suivi temporel de ces éléments d'intérêt tels que des personnes ou des objets.

A titre d'exemples, on peut citer les documents « Fusion of Head and Full-Body Detectors for Multi-Object Trancking", de Henschel Roberto et al, in 2018 IEEE/CVF Conférence on Computer Vision and Pattern Récognition Workshops, IEEE,"Multi-Object tracking through occlusions by local tracklets filtering and global tracklets association with détection respoonses", de Junliang Xing et al., in 2009 IEEE Conférence on Computer Vision and Pattern Recognition, et "Learning Optimal Parameters for Multi-target Tracking with Contextuel Interactions" de Wang Shaofeil et al. in International Journal of Computer Vision, Kluwer Academic Publishers, vol. 122, no. 3, 2016.

Plus précisément, l'objectif est d'analyser une séquence d'images successives (typiquement des frames d'une vidéo, par exemple acquise par une caméra de surveillance), et d'identifier un même élément présent entre plusieurs images de sorte à suivre son déplacement. Chaque élément identifié (par exemple chaque visage) se voit attribuer un identifiant unique (typiquement un nombre entier) commun à toutes les frames. Ainsi, on peut par exemple reconnaître un suspect par son visage, et suivre de proche en proche son déplacement dans une foule.

Aujourd'hui, ces techniques apportent satisfaction mais restent perfectibles. En particulier on rencontre un problème « d'association » entre eux d'éléments lorsque l'un est une sous-partie de l'autre. Par exemple, il parait évident que chaque personne est associée de manière unique et permanente à un visage, ou similairement que chaque véhicule est associé de manière unique et permanente à une plaque d'immatriculation, mais ce lien est parfois complexe à maintenir.

Une première intuition est en effet de partir du principe (dans l'exemple visage/personne) qu'une détection de visage doit être incluse dans la boite de la personne, et donc d'associer un visage avec une détection de personne qui contienne cette détection de visage.

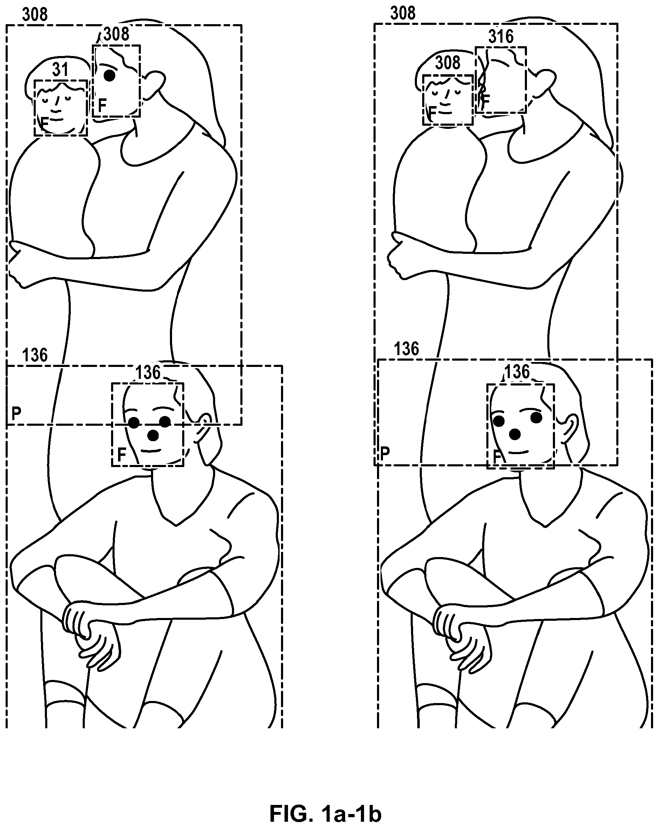

Cette solution n'est pas fiable, car une détection d'un piéton (la boite englobante) peut « contenir » plusieurs visages selon le contexte et la disposition des personnes. Par exemple, en référence aux **figures 1a-1b** (qui représentent deux frames successives de la même scène), un adulte peut tenir un bébé dans ses bras, et la boite de l'adulte contient alors deux détections de visage proches.

Ainsi, d'une part l'algorithme ne sait pas laquelle associer avec la détection de personne, et d'autre part cette association peut être perturbée au cours du temps. Dans l'exemple de la figure 1a, on a bien le bon visage associé à la bonne personne sous l'identifiant 308, et le visage du bébé présente l'identifiant 311, mais lorsque le nez de cette personne pénètre dans la boite du visage du bébé (cas de la figure 1b), on observe un changement de l'association personne-visage : le visage du bébé se voit affecter l'identifiant 308 de l'adulte alors que le visage de l'adulte n'a plus de personne associée et se voit affecter le nouvel identifiant 316. Quand bien même l'association est rétablie quelques images plus loin, on se retrouve avec plus d'identifiants créés que d'éléments réels (on ne sait plus quelle association croire), ce qui fausse tout le tracking.

Il serait par conséquent souhaitable de disposer d'une nouvelle solution d'association entre un élément et une sous-partie de cet élément qui soit simple, fiable et universelle, et ce sans surcoût de temps calcul.

PRESENTATION DE L'INVENTION

Selon un premier aspect, la présente invention concerne un procédé d'association d'éléments d'intérêt visibles dans une vidéo constituée d'une séquence de K images, caractérisé en ce qu'il comprend la mise en oeuvre par des moyens de traitement de données d'un terminal, pour une k-ième image de ladite vidéo, d'étapes de :

(a) Détection et identification d'au moins un élément d'intérêt d'une première catégorie visible dans ladite k-ième image et d'au moins un élément d'intérêt d'une deuxième catégorie différente de la première catégorie visible dans ladite k-ième image, l'une de la première et de la deuxième catégorie d'élément d'intérêt étant une sous-partie de l'autre, ; et, si un élément d'intérêt de la première catégorie détecté dans ladite k_ième image et un élément d'intérêt de la deuxième catégorie détecté dans ladite k-ième image sont considérés comme faisant partie de la même entité, association duditélément d'intérêt de la première catégorie détecté dans la *k-ième* image avec ledit élément d'intérêt de la deuxième catégorie dans ladite *k-ième* image ;

(b) Calcul d'un coût d'association d'une pluralité de paires possibles d'un élément d'intérêt de la première catégorie visible dans au moins une image de la vidéo avec un élément d'intérêt de la deuxième catégorie visible dans au moins une image de la vidéo, en fonction d'au moins des compteurs d'association de chaque paire possible d'un élément d'intérêt de la première catégorie avec un élément d'intérêt de la deuxième catégorie, le compteur d'association d'une paire d'éléments d'intérêt représentant le nombre de fois que les deux éléments de cette paire ont été préalablement associés dans la vidéo ;

(c) Mise en oeuvre d'un algorithme d'optimisation combinatoire en fonction des coûts d'association calculés de sorte à déterminer une combinaison optimale de paires d'un élément d'intérêt de la première catégorie dans ladite k-ième image avec un élément d'intérêt de la deuxième catégorie détecté dans ladite k-ième image, et, pour chaque partie de ladite combinaison optimale, réassociation dudit élément d'intérêt de la première catégorie visible dans ladite *k-ième* image avec ledit élément d'intérêt de la deuxième catégorie visible dans ladite *k-ième* image de la paire;

(d) Mise à jour des compteurs d'association par incrémentation et/ou décrémentation.

Selon d'autres caractéristiques avantageuses et non limitatives :

- Le procédé est répété itérativement pour chaque image $k \in [\![1;K]\!]$ de la vidéo ;
- soit l'une de la première et de la deuxième catégorie est la catégorie visage et l'autre est la catégorie personne, soit l'une de la première et de la deuxième catégorie est la catégorie plaque d'immatriculation et l'autre est la catégorie véhicule ou une sous-catégorie de la catégorie véhicule ;
- ledit algorithme d'optimisation combinatoire est l'algorithme hongrois ;
- la détection de l'étape (a) est mise en oeuvre au moyen d'au moins un réseau de neurones à convolution, **CNN**
- chaque élément d'intérêt est référencé avec un identifiant, deux éléments d'intérêt associés étant référencés avec le même identifiant ;
- un coût d'association est calculé à l'étape (b) pour chaque paire d'un élément d'intérêt de la première catégorie détecté dans la *k-ième* image avec un élément d'intérêt de la deuxième catégorie déjà détecté dans au moins une image de la vidéo tel que le compteur d'association de ladite paire n'est pas nul, et pour chaque paire d'un élément d'intérêt de la deuxième catégorie détecté dans la *k-ième* image avec un élément d'intérêt de la première catégorie déjà détecté dans au moins une image de la vidéo tel que le compteur d'association de ladite paire n'est pas nul ;
- chaque élément d'intérêt est référencé avec un identifiant, deux éléments d'intérêt associés étant référencés avec le même identifiant.
- si l'étape (a) comprend la détection dans la *k*-ième image d'au moins un premier élément d'intérêt, un deuxième élément d'intérêt et un troisième élément d'intérêt, le premier élément d'intérêt étant de la première catégorie et les deuxième et troisième éléments d'intérêt étant de la deuxième catégorie, et si le premier élément d'intérêt est associé au deuxième élément d'intérêt, l'étape (c) comprend en fonction du résultat de la mise en oeuvre dudit algorithme d'optimisation combinatoire :

  - Soit le maintien de l'association du premier élément d'intérêt avec le deuxième élément, le compteur d'association du premier élément d'intérêt avec le deuxième élément d'intérêt étant alors incrémenté dans l'étape (d) ;

  - Soit la réassociation du premier élément d'intérêt avec le troisième élément d'intérêt à la place du deuxième élément d'intérêt, le compteur d'association du premier élément d'intérêt avec le troisième élément d'intérêt étant alors incrémenté dans l'étape (d) ;

- si l'étape (a) comprend la détection et l'identification dans la *k*-ième image d'au moins un premier élément d'intérêt,un deuxième élément d'intérêt, et un troisième élément d'intérêt, le premier élément d'intérêt étant de la première catégorie et les deuxième et troisième éléments d'intérêt étant de la deuxième catégorie, et si le premier élément d'intérêt est associé au deuxième élément d'intérêt, l'étape (c) comprend en fonction du résultat de la mise en oeuvre dudit algorithme d'optimisation combinatoire :

- Soit le maintien de l'association du premier élément d'intérêt avec le deuxième élément, le compteur d'association du premier élément d'intérêt avec le deuxième élément d'intérêt étant alors incrémenté dans l'étape (d) ;
- Soit la réassociation du premier élément d'intérêt avec le troisième élément d'intérêt à la place du deuxième élément d'intérêt, le compteur d'association du premier élément d'intérêt avec le troisième élément d'intérêt étant alors incrémenté dans l'étape (d) ;

• un compteur d'association non-incrémenté est décrémenté à l'étape (d) ;
• le coût d'association du *i-ième* élément d'intérêt de la première catégorie visible dans ladite *k-ième* image avec le *j-ième* élément d'intérêt de la deuxième catégorie visible dans ladite *k-ième* image, est obtenu à l'étape (b) par l'une des formules suivantes :

$$C_{ij} = 1 - \frac{2*ac_{ij}}{\sum_{l=0}^{n} ac_{il} + \sum_{l=0}^{m} ac_{lj}} \quad C_{ij} = \sum_{l\neq j}^{n} ac_{il} + \sum_{l\neq i}^{m} ac_{lj}$$

$$, \quad C_{ij} = 1 - \frac{2*ac_{ij}*sd_i*sd_j}{\sum_{l=0}^{n} sd_i ac_{il} + \sum_{l=0}^{m} sd_j ac_{lj}} \quad \text{ou} \quad C_{ij} = \sum_{l\neq j}^{n} sd_i ac_{il} + \sum_{l\neq i}^{m} sd_j ac_{lj}$$

; avec *n* le nombre d'éléments d'intérêts de la première catégorie et m le nombre d'éléments d'intérêt de la deuxième catégorie visibles dans ladite *k-ième* image, et $sd_{i/j}$ respectivement les scores de détection dudit *i-ième* élément d'intérêt de la première catégorie et dudit j-ième élément d'intérêt de la deuxième catégorie.

Selon un deuxième et un troisième aspects, l'invention propose un produit programme d'ordinateur comprenant des instructions de code pour l'exécution d'un procédé selon le premier aspect d'association d'éléments d'intérêt visibles dans une vidéo ; et un moyen de stockage lisible par un équipement informatique sur lequel un produit programme d'ordinateur comprend des instructions de code pour l'exécution d'un procédé selon le premier aspect d'association d'éléments d'intérêt visibles dans une vidéo.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- Les figures 1a et 1b représentent deux exemples d'association d'éléments d'intérêt dans des images vidéo en utilisant un procédé connu ;
- la figure 2 est un schéma d'une architecture pour la mise en oeuvre des procédés selon l'invention ;
- la figure 3 illustre les étapes d'un mode de réalisation préféré d'un procédé selon l'invention
- les figures 4a-4b représentent deux cas d'association/identification erronées d'éléments d'intérêt et comment le procédé selon l'invention résout ces cas ;
- la figure 5 représente un exemple d'architecture de CNN pour la mise en oeuvre d'une tâche de détection d'un mode de réalisation du procédé selon l'invention ;
- la figure 6 illustre schématiquement l'apprentissage d'un CNN pour un mode de réalisation préféré du procédé selon l'invention ;
- la figure 7a représente un exemple de vecteur de représentation généré lors de la mise en oeuvre d'un mode de réalisation préféré du procédé selon l'invention ;
- la figure 7b représente un exemple d'association d'éléments d'intérêt dans une image selon un mode de réalisation préféré du procédé selon l'invention.

DESCRIPTION DETAILLEE

*Notions*

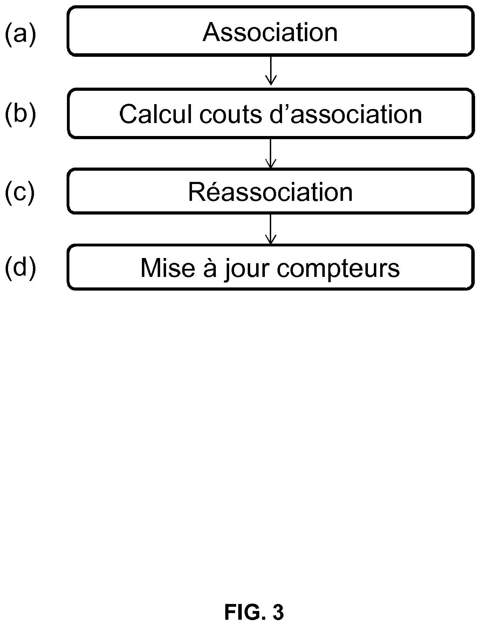

En référence à la **figure 3** qui sera décrite plus loin, selon plusieurs aspects complémentaires la présente invention peut impliquer :

- un procédé d'apprentissage d'un réseau de neurones à convolution (CNN) ;
- un procédé de détection d'éléments d'intérêt visibles dans une image ;
- un procédé d'association d'éléments d'intérêt visibles dans une image/ dans une vidéo constituée d'une séquence de $K$ images (i.e. de frames) ;
- un procédé de suivi d'éléments d'intérêt visibles dans la vidéo.

Ici, le terme « élément d'intérêt » désigne toute représentation dans l'image/vidéo d'une entité dont on souhaite la détection/association/suivi dans une image/vidéo. Chaque élément d'intérêt est d'une catégorie donnée, correspondant à un type au sens sémantique. Par exemple, les catégories personne, visage, véhicule, plaque d'immatriculation, etc. peuvent être considérées : la catégorie véhicules recouvre l'ensemble de tous les véhicules (voiture/camion/bus...) quel que soit le modèle, la couleur, etc., la catégorie plaque d'immatriculation recouvre l'ensemble de toutes les plaques quel que soit le pays/région d'émission, la couleur, etc.

La « détection », ou « reconnaissance » est l'opération la plus basique, et désigne le simple marquage d'un élément d'intérêt d'une catégorie connue dans une image. La détection combine ainsi la localisation (détermination de la position et la taille d'une boite englobant l'élément d'intérêt, dite boite de détection) et la classification (détermination de sa catégorie).

Par « suivi », on entend comme expliqué avant le « tracking » de ces éléments d'intérêt pendant la durée de la vidéo, c'est-à-dire l'identification continue d'un même élément détecté d'image en image où il est présent de sorte à déterminer le déplacement de l'entité correspondante au cours du temps.

Pour cela, on référence chaque élément d'intérêt avec un identifiant, l'ensemble des occurrences d'un élément d'intérêt pour un identifiant donné étant appelé une « track ».

On fera la différence entre la « détection » et « l'identification » : alors que la détection se fait image par image, et ne fait pas de distinction entre les différents éléments d'une même catégorie, l'identification affecte aux détections les bons identifiants de sorte à ce que deux détections de la même entité sur deux images différentes aient le même identifiant, i.e. fasse partie de la même track. Par exemple, supposant que sur une première image soient identifiés comme « personne 1 » et « personne 2 » deux éléments de catégorie personne et que soient détectés dans une deuxième image à nouveau deux éléments de catégorie personne, l'identification permet de déterminer dans la deuxième image lequel est la personne 1/2 (voire même une personne 3)

L'identification peut en d'autres termes être vue comme la mise en correspondance d'un élément détecté avec une entité, c'est-à-dire la distinction entre les différents éléments de la même catégorie détectables dans une ou plusieurs images.

On comprend que dans un tracking « parfait » une entité devrait être identifiée de façon unique et constante par un même élément d'intérêt, i.e. il devrait y avoir une correspondance exacte entre élément d'intérêt et entité, mais en pratique une entité peut être associée au cours du temps à plusieurs élément d'intérêts (constituant des doublons), voire un élément d'intérêt peut changer d'entité (confusion de deux entités), voir plus loin. Il s'agit d'inexactitudes dans le tracking que le présent procédé permet efficacement de résoudre.

Par « association », on entend la mise en correspondance de deux éléments d'intérêt de catégories différentes mais liés.

Un premier élément d'intérêt d'une première catégorie et un deuxième élément d'intérêt d'une deuxième catégorie peuvent être associés s'ils présentent un lien, notamment s'ils font partie d'une même entité. En général, deux éléments d'intérêts de catégories différentes associés sont référencés par un même identifiant, i.e. il y a un identifiant unique par entité, comme c'est le cas dans les exemples des figures 1a, 1b.

On fera la différence entre la simple association d'éléments d'intérêt dans une image donnée, i.e. cette image prise isolément et indépendamment de tout contexte, et l'association d'éléments d'intérêt dans une vidéo, qui sera plus précisément l'objet de l'invention, dans laquelle l'association d'élément d'intérêt dans une image tient compte des associations aux images passées, en d'autre termes on vise une cohérence dans la vidéo.

Dans la suite de la description, on considérera le mode de réalisation préféré d'une association de nature « sous-partie ». En d'autres termes, l'une de la première et de la deuxième catégorie d'élément d'intérêt est une sous-partie de l'autre, i.e. en fait partie. Arbitrairement, la présente description considère la deuxième catégorie comme étant une sous-partie de la première catégorie, mais l'inverse pourra naturellement être considéré. Selon un exemple, la deuxième catégorie est la catégorie visage et la première catégorie est la catégorie personne. Selon un autre exemple, la deuxième catégorie est la catégorie plaque d'immatriculation et la première catégorie est la catégorie véhicule.

A noter que l'invention ne sera pas limitée à une association de nature sous-partie, et on pourra par exemple considérer une association de catégories elles-mêmes sous-parties d'une troisième catégorie (par exemple une association visage-main).

On peut même envisager des cas d'association où il n'y a aucune relation partie/sous-partie que ce soit directement ou indirectement, par exemple personne et bagage.

Dans un cas où il y a plus de deux catégories d'élément d'intérêt qui peuvent être associées (par exemple, personne/visage/main), en particulier une première catégorie, une deuxième catégorie et une troisième catégorie, il suffit de définir une catégorie principale (la « partie ») et des catégories secondaires (les « sous-parties »), et on associera chaque catégorie secondaire à la catégorie principale. Par exemple, s'il y a personne/visage/main, chaque main sera associée à une personne et chaque visage sera associé à une personne, mais on ne tentera pas d'associer les mains et les visages (dans la mesure où cette association est connue par transitivité à partir des deux autres).

Dans le cadre de la présente invention, on vise plus précisément le tracking simultané d'au moins deux catégories d'éléments d'intérêt, en particulier de sorte à les associer sur la durée.

A nouveau, on comprendra que dans un tracking « parfait » deux éléments d'intérêt de catégories différentes devraient être associés si et seulement si ils font partie de la même entité, mais en pratique et notamment en cas d'erreur dans l'identification, des éléments d'intérêts peuvent se retrouver associés alors qu'ils correspondent en réalité respectivement à deux entités différentes, ou au contraire des éléments d'intérêts correspondant pourtant à la même entité peuvent ne pas être associés. Le présent procédé vient également résoudre ces problèmes

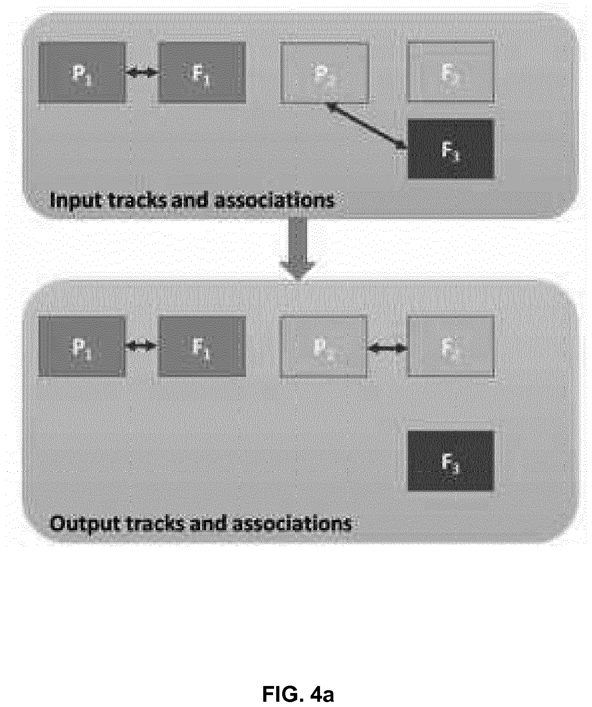

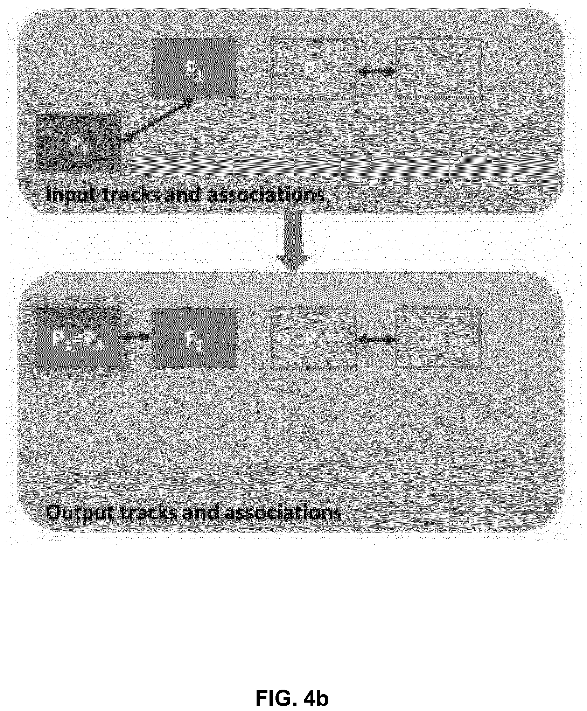

Les **figures 4a et 4b** représentent deux exemples d'associations inexactes, et comment elles sont « corrigées » grâce à la mise en oeuvre du présent procédé d'association, qui seront décrites plus loin.

Dans les figures, les éléments d'intérêt référencés $P_i$ ($P_1$, $P_2$ et $P_4$) sont de catégorie personne (« première » catégorie), et les éléments d'intérêt référencés $F_j$ ($F_1$, $F_2$ et $F_3$) sont de catégorie visage (« deuxième » catégorie). On suppose que $P_1$ et $P_4$ sont des éléments d'éléments d'intérêt formant doublons (ils identifient la même première personne), et $P_2$ identifie valablement une deuxième personne. On suppose également que $F_1$, $F_2$ et $F_3$ identifient valablement les visages respectifs de la première, la deuxième et une troisième personne.

Dans la figure 4a, on a d'un côté une association exacte de $P_1$ avec $F_1$ (la première personne et son visage), et de l'autre côté une association inexacte de $P_2$ avec $F_3$ au lieu de $F_2$ (le visage de la troisième personne est associé à la deuxième personne). Il n'y a pas de problèmes dans les tracks mais l'association est à parfaire.

Dans la figure 4b, on a cette fois d'un côté une association exacte de $P_2$ avec $F_2$ (la deuxième personne et son visage), et de l'autre côté une association de $P_4$ avec $F_1$. Cette dernière association n'est pas totalement inexacte puisque $P_4$ identifie la première personne, cependant il faudrait que la première personne soit identifiée par la track $P_1$ « originale » et non le doublon $P_4$.

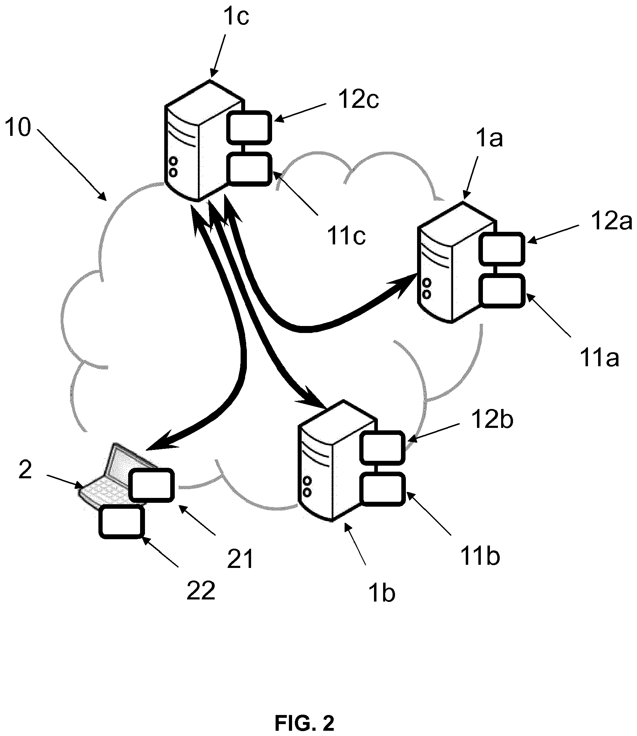

Les présents procédés sont mis en oeuvre au sein d'une architecture telle que représentée par la **figure 2,** grâce à un ou plusieurs serveurs 1a, 1b, 1c et un terminal 2. Comme l'on verra, le procédé peut comprendre l'apprentissage d'un ou plusieurs réseaux de neurones à convolution, CNN, et le cas échéant le ou les serveurs 1a, 1b, 1c sont des équipements d'apprentissage associés. Le terminal 2 est quant à lui un équipement d'utilisation à proprement parler c'est-à-dire mettant en oeuvre tout ou partie du présent procédé), par exemple un équipement de traitement de données de vidéo-surveillance.

Dans tous les cas, chaque équipement 1a, 1b, 1c, 2 est typiquement un équipement informatique distant relié à un réseau étendu 10 tel que le réseau internet pour l'échange des données. Chacun comprend des moyens de traitement de données 11a, 11b, 11c, 21 de type processeur, et des moyens de stockage de données 12a, 12b, 12c, 22 telle qu'une mémoire informatique, par exemple un disque.

Au moins un des éventuels serveurs 1a, 1b, 1c stocke une base de données d'apprentissage, i.e. un ensemble d'images d'apprentissage, c'est-à-dire sur lesquelles des éléments d'intérêt ont été déjà annotés et étiquetés avec la catégorie d'élément correspondant (par opposition à la vidéo dite d'entrée sur laquelle on cherche à faire le tracking). De façon préférée, on a au moins deux, voire au moins trois, bases d'images d'apprentissage, stockées sur autant de serveurs distincts (exemple de deux serveurs 1a et 1b dans la figure 2).

Dans la figure 2, le serveur 1c est un serveur optionnel qui ne dispose quant à lui pas de base d'images d'apprentissage et qui met en oeuvre l'obtention du ou des CNN à partir des bases de données des serveurs 1a, 1b. Le rôle de ce serveur 1c peut cependant tout à fait être accompli par l'un ou l'autre des serveurs 1a, 1b.

*CNN*

Un CNN contient généralement quatre types de couches traitant successivement l'information :

- la couche de convolution qui traite des blocs de l'entrée les uns après les autres ;
- la couche non linéaire qui permet d'ajouter de la non linéarité au réseau et donc d'avoir des fonctions de décision beaucoup plus complexes ;
- la couche de mise en commun (appelée « pooling ») qui permet de regrouper plusieurs neurones en un seul neurone ;
- la couche entièrement connectée qui relie tous les neurones d'une couche à tous les neurones de la couche précédente.

La fonction d'activation de couche non linéaire *NL* est typiquement la fonction *ReLU* (Rectified Linear Unit, i.e. Unité de Rectification Linéaire) qui est égale à $f(x) = max(0, x)$ et la couche de pooling (notée *POOL*) la plus utilisée est la fonction *MaxPool2×2* qui correspond à un maximum entre quatre valeurs d'un carré (on met en commun quatre valeurs en une seule).

La couche de convolution, notée *CONV,* et la couche entièrement connectée, notée *FC,* correspondent généralement à un produit scalaire entre les neurones de la couche précédente et les poids du CNN.

Les architectures typiques de CNN empilent quelques paires de couches *CONV -> NL* puis ajoutent une couche *POOL* et répètent ce schéma *[(CONV → NL)^P -> POOL]* jusqu'à obtenir un vecteur de sortie de taille suffisamment petite, puis terminent par une ou deux couches entièrement connectées *FC.*

En analyse d'image, il n'y a pas toujours de couches non-linéaires *NL* ni même de couches entièrement connectées *FC.*

L'homme du métier pourra par exemple se référer aux CNN décrits dans les documents YOLO9000: Better, Faster, Stronger - Joseph Redmon, Ali Farhadi, https://arxiv.org/abs/1612.08242*,* Faster R-CNN: Towards Real-Time Object Détection with Region Proposal Networks, https://arxiv.org/abs/1506.01497*,* ou leurs dérivés.

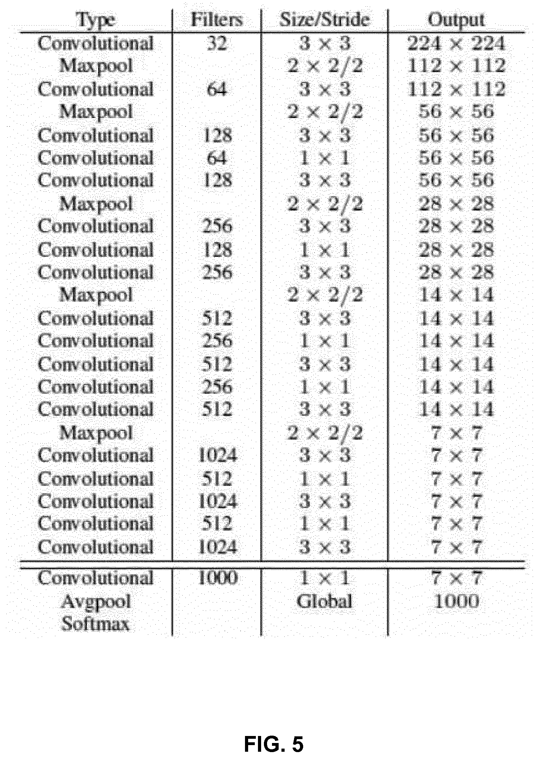

Dans la suite de la présente description, on prendra en particulier un exemple de CNN basé sur l'architecture « Darknet-19 » représentée dans la **figure 5** et décrite dans le document *YOLO9000,* qui comprend 19 couches de convolution *CONV,* 5 couches de pooling *MaxPool2x2* (Alternativement, on pourra également citer la version « Darknet-53 », à 53 couches de convolution *CONV,* ou n'importe quelle architecture de type *VGG, RESNET, DENSNET,* etc.).

En reprenant l'exemple de Darknet-19, on pourra construire un CNN de détection en prenant son tronc commun (i.e. la partie s'étendant jusqu'au double trait horizontal dans la figure 5) et en y ajoutant éventuellement trois couches de convolution présentant 1024 filtres de taille $3×3$, et surtout une dernière couche de convolution CONV présentant avantageusement des filtres de taille 1x1, qui agit comme couche dite « d'encodage » et présente une sortie de taille C (i.e. présente un nombre de filtres égale à la taille souhaitée du vecteur de représentation en sortie, voir plus loin). Alternativement, une couche entièrement connectée FC peut être utilisée comme couche d'encodage.

En effet, l'objectif d'une méthode à base de CNN est de décrire le plus précisément possible et de façon répétable le contenu d'une image sous forme d'un vecteur contenant toutes les informations des éléments à détecter, c'est ce que permet la couche d'encodage. Ainsi, la couche d'encodage génère un vecteur de représentation des éléments d'intérêt détectés.

L'image est découpée spatialement en S cellules (par exemple des cellules de 7x7), chaque cellule dispose de *B* 'boites de description' (typiquement, *B=2 ou* 3), qui indiquent la présence d'un ou plusieurs éléments d'intérêt (jusqu'à 8 éléments) dans cette cellule, et constituent ainsi des boites de détection « candidates ». La bonne boite de détection est celle qui englobe au mieux (c'est-à-dire au plus près) l'élément d'intérêt correspondant.

La présence d'une entité dans une boite de description se traduit à minima par la donnée de sa position dans la cellule et de sa catégorie, codée sous la forme du vecteur dit « de représentation » de C valeurs généré par la couche d'encodage. Généralement, le vecteur comprend au moins cinq valeurs :

- Coordonnées *x/y* du centre de la boite de description (en fraction de la taille de la cellule) ;
- Longueur/largeur *w/h* de la boite de description (en fraction de la taille de la cellule) ;
- Identifiant c de la catégorie de l'élément d'intérêt

Le code total de description d'une image est la concaténation de tous les vecteurs de représentation des boites de description, soit de longueur *S*B*C.*

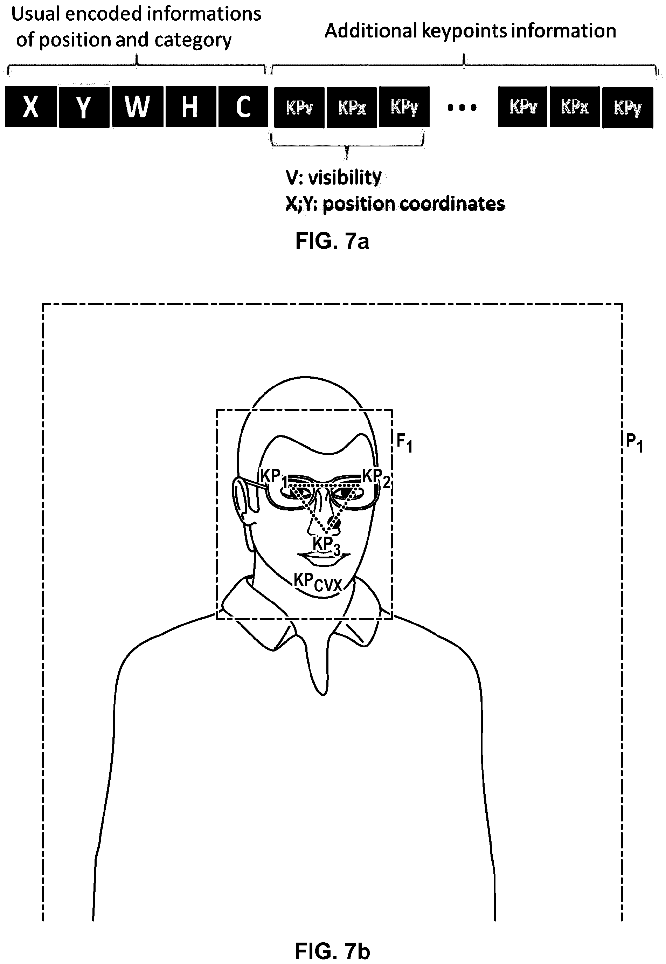

En référence à la **figure 7a,** au moins certains vecteurs de représentation (ceux pour un élément d'intérêt d'une catégorie donnée, par exemple les personnes) sont allongés, i.e. se voient concaténer des valeurs descriptives d'au moins une structure géométrique caractéristique de ladite catégorie, en particulier lesdites valeurs descriptives comprennent avantageusement au moins deux valeurs de position (coordonnées *KPx/KPy)* et/ou une valeur de visibilité (valeur booléenne *KPv)*. De façon particulièrement préférée, il y a au moins trois structures géométriques caractéristiques, c'est-à-dire au moins neuf valeurs descriptives additionnelles, comme l'on verra plus loin.

Ainsi, la détection des points caractéristiques est accomplie de façon simultanée avec la détection des éléments d'intérêt, sans surcout de temps et sans dégradation des performances.

Par « structure géométrique caractéristique », on entend tout particulièrement un point caractéristique (en anglais « keypoint »), mais également une forme telle qu'un polygone, un maillage, etc. et de façon générale tout objet graphique facilement repérable sur tous les éléments de cette catégorie. De façon particulièrement préférée, lorsque l'un de la première catégorie et de la deuxième catégorie est une sous-partie de l'autre, on choisit des structures géométriques caractéristiques communes à la première catégorie et à la deuxième catégorie. Dans l'exemple visage/personne, on pourra ainsi par exemple prendre les deux yeux et le nez : en effet, il s'agit de structures géométriques d'une forme très particulière, caractéristiques aussi bien d'une personne que d'un visage.

L'utilisation de ces structures géométriques caractéristiques « communes » permet très astucieusement de réaliser comme on va le voir plus tard l'association d'éléments de deux catégories dans l'image, et ce de façon très fiable.

Dans la suite de la description, on prendra l'exemple dans lequel lesdites structures géométriques sont des points, et par exemple on annotera les yeux ou le nez d'un visage comme des points.

Avantageusement on peut encoder d'autres informations sur ce code sur le vecteur de représentation (d'autres boites englobantes, une information sur l'action en cours, un numéro de plaque immatriculation d'un véhicule, etc.)

*Procédé d'apprentissage*

Avantageusement, est mis en oeuvre un procédé d'apprentissage de paramètres d'au moins un réseau de neurones à convolution, CNN, pour détection d'éléments visibles dans des images, à partir d'une pluralité de base d'images d'apprentissage dans lesquels lesdits éléments sont déjà annotés, i.e. localisés et classifiés (la catégorie est déterminé). Chaque base d'images est en effet avantageusement associée à un ensemble de catégories d'élément d'intérêt, les éléments d'intérêt annotés dans les images d'une base étant ceux appartenant à une catégorie dudit ensemble de catégories associé à la base.

Comme expliqué avant, pour les éléments d'au moins une catégorie donnée peuvent être déjà annotés une ou plusieurs structures géométriques caractéristiques, i.e. leurs coordonnées dans l'image connues. On comprend que les structures géométriques caractéristiques ne sont pas toujours visibles et donc ne sont renseignés que s'ils sont visibles. Par exemple une personne de profil peut être détectée en tant qu'élément de catégorie personne (son visage aussi), mais son oeil gauche ou droit ne sera pas visible car derrière la tête.

Selon un premier mode classique, chaque CNN est appris à partir d'une unique base d'apprentissage, pour un sous-ensemble de l'ensemble des catégories associé à cette base (voire une seule catégorie, et en particulier la première ou la deuxième catégorie). En d'autres termes, il apprend à reconnaître une ou plusieurs des catégories d'éléments déjà annotés dans les images d'apprentissage de cette base.

Il n'est pas possible de fusionner deux bases de données d'apprentissage car celles-ci sont « partiellement » annotées l'une par rapport à l'autre. Par exemple si l'on considère une base de personnes et une base de véhicules, les véhicules ne sont pas annotés dans la base de personnes et vice-versa, ce qui constitue des faux négatifs qui perturberaient complètement l'apprentissage. Il faudrait manuellement ajouter les annotations manquantes, ce qui est un travail titanesque. On citera par exemple la base MS-COCO (la plus utilisée) qui contient seulement des annotations de personnes, de quelques animaux et de quelques objets, mais pas d'annotation de visages. On citera également par exemple la base de données WIDER, qui contient uniquement des annotations de visage.

De surcroit, si l'une de la première et de la deuxième catégorie d'élément d'intérêt est une sous-partie de l'autre, même en créant une base ad hoc il ne serait pas possible d'apprendre simultanément à un CNN à détecter les deux catégories du fait de leur inclusion.

Ainsi, si on est dans un cas où la première catégorie est dans l'ensemble de catégories d'une première base et la deuxième catégorie est dans l'ensemble de catégories d'une deuxième base, on apprend deux CNN qui constituent deux « détecteurs » indépendants.

Par exemple on peut apprendre d'un côté un détecteur d'éléments de catégorie visage à partir d'une première base associée à un ensemble de catégories d'élément d'intérêt comprenant la catégorie visage (typiquement directement par les moyens de traitement 11a du premier serveur 1a si c'est celui qui stocke la première base), et de l'autre côté un détecteur d'éléments de catégorie personne à partir d'une deuxième base associée à un ensemble de catégories d'élément d'intérêt comprenant la catégorie personne (typiquement directement par les moyens de traitement 11b du deuxième serveur 1b si c'est celui qui stocke la deuxième base).

A noter que limiter le nombre de catégories différentes détectables par un CNN réduit d'autant la taille nécessaire du vecteur de représentation en sortie.

Selon un deuxième mode de réalisation préféré, on contourne astucieusement le problème de l'incompatibilité des différentes bases de sorte à avoir au moins un CNN commun appris directement à partir d'une pluralité de bases d'images d'apprentissage, et ce en un seul apprentissage. Cela est avantageusement réalisé par les moyens de traitement de données 11c du serveur 1c connecté aux autres serveurs 1a, 1b des bases de données. Ledit CNN est dit « commun » à plusieurs bases de données (en d'autres termes on a un seul CNN qui apprend à la fois sur plusieurs bases de données), par opposition aux CNN classiques qui ne peuvent apprendre chacun que sur une base.

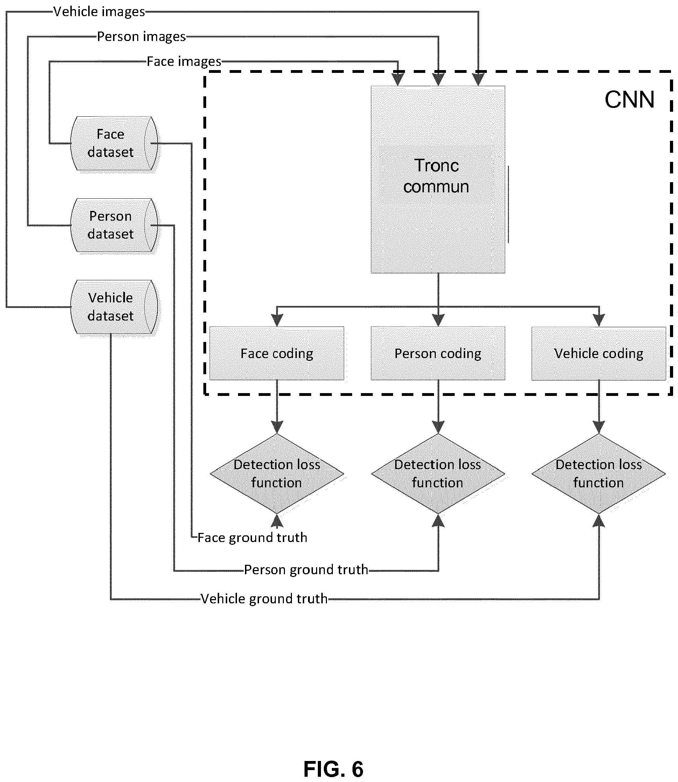

En référence à la **figure 6,** ladite pluralité de bases d'images d'apprentissage comprend avantageusement au moins une première base d'images d'apprentissage (dans lesquelles au moins les éléments d'intérêt de la première catégorie sont déjà annotés) et une deuxième base (dans lesquelles au moins les éléments d'intérêt de la deuxième catégorie sont déjà annotés), voire une troisième base.

En particulier, l'ensemble de catégories d'élément d'intérêt associé à la première base comprend la catégorie personne (la première catégorie dans les exemples), l'ensemble de catégories d'élément d'intérêt associé à la deuxième base comprend la catégorie visage (la deuxième catégorie), et l'ensemble de catégories d'élément d'intérêt associé à l'éventuelle troisième base comprend un ou plusieurs catégories d'objets inanimés, comme la catégorie véhicule ou au moins une sous-catégorie de véhicule (par exemple, les sept catégories voiture, camion, bus, deux roue, bicyclette, avion et bateau). On comprend cependant que l'on n'est limité à aucun choix de bases/catégories.

Pour cela, on utilise comme CNN commun un CNN présentant un tronc commun et une pluralité de couches d'encodage chacune spécifique d'une de ladite pluralité de bases d'images d'apprentissage.

En d'autres termes, comme l'on voit dans la figure 6, l'architecture du CNN présente non pas une couche d'encodage commune à l'ensemble des modalités (c'est-à-dire les différents ensembles de catégories), mais une couche d'encodage spécifique à certaines des modalités.

De façon particulièrement préférée, ledit tronc commun comprend toutes les couches présentant des paramètres variables autres que la couche d'encodage, et en particulier début le début. Dans l'exemple de la figure 5, le tronc commun s'étend jusqu'au double trait horizontal.

En d'autres termes, en supposant qu'on a trois bases d'images d'apprentissage comme dans l'exemple de la figure 6, alors on a trois couches d'encodage et pour chaque image d'apprentissage prise en entrée on utilise la couche d'encodage correspondant à la base dont vient l'image d'apprentissage.

On comprend donc que toutes les images d'apprentissage participent à l'apprentissage du tronc commun, mais que seules les images d'une base participent à l'apprentissage de chaque couche d'encodage.

Les diverses couches d'encodage sont comme expliqué composées chacune avantageusement d'une couche de convolution avec des filtres préférentiellement de taille 1x1, et dont la taille de sortie C (le nombre de filtres) correspond à la taille du vecteur de représentation (typiquement 8 pour les personnes et les visages, et 14 pour les véhicules s'il y a 7 sous-catégories comme dans l'exemple ci-dessus, plus lesdites valeurs descriptives d'au moins une structure géométrique caractéristique pour au moins l'une d'entre elles). Les diverses couches d'encodage sont typiquement disposées en parallèle.

En complément, on utilise avantageusement comme représenté sur la figure 6 une pluralité de fonctions de coût à nouveau chacune spécifique d'une de ladite pluralité de bases d'images d'apprentissage.

On rappelle qu'une fonction de coût (dite de « loss », c'est-à-dire de perte) spécifie comment l'apprentissage du CNN pénalise l'écart entre le signal prévu et réel. Plus précisément, pour une donnée d'entrée (image d'apprentissage), la fonction de coût permet de quantifier une « erreur » entre la sortie obtenue par le CNN (les éléments détectés) et la sortie théorique (les éléments annotés). L'apprentissage vise à modifier les paramètres du CNN de sorte à diminuer graduellement l'erreur telle que calculée par la fonction de coût. On connait par exemple la fonction *Softmax* (ou fonction exponentielle normalisée), ou encore la fonction de Huber, des normes comme la norme L1, etc.

Pour réaliser l'apprentissage à proprement parler, la technique classique dite de rétropropagation du gradient propage « vers l'arrière » l'erreur calculée de sorte à mettre à jour les paramètres de toutes les couches.

Dans le présent mode de réalisation, on utilise pour ce faire des fonctions de coût différentes selon la base d'où vient chaque image d'apprentissage. Plus précisément, on tire aléatoirement de façon itérative des images d'apprentissage dans la pluralité de base (i.e. chaque image peut être issue de n'importe quelle base), et on fait varier pour chacune les poids et paramètre du CNN sur la base de la fonction de coût correspondant à la base dont elle provient.

De façon particulièrement préférée, on met en oeuvre un paradigme d'apprentissage dit en « batch », c'est-à-dire que pour un ensemble d'images d'apprentissage issues indifféremment des diverses bases l'on calcule d'abord les erreurs (avec la fonction de coût correspondante) sans mettre à jour les paramètres, puis on additionne ces différentes erreurs, et lorsque l'ensemble des images dudit ensemble est passé une fois dans le CNN, on applique la rétropropagation dans tout le CNN en utilisant l'erreur totale (sommée).

Le CNN commun pourra être utilisé comme détecteur « multi-catégories » lorsqu'appliqué aux images de la vidéo. Naturellement il est déjà possible de faire des détecteurs multi-catégories à partir d'une seule base de données si celle-ci a déjà les éléments de plusieurs catégories annotés, mais on est limité à ces catégories. Le CNN commun du présent mode de réalisation permet de combiner n'importe quelles bases de données d'apprentissage, et donc d'être multi-catégories de façon complètement libre.

On comprend que le fait de multiplier les couches d'encodage et les fonctions de coût permet, sans augmenter sensiblement la taille du réseau, de ne pas avoir une détection pénalisée par une autre et d'avoir la même efficacité qu'avec une pluralité de détecteurs. De plus on a un gain de temps significatif dans l'apprentissage puisque celui-ci peut être simultané pour toutes les bases.

A noter qu'il reste tout à fait possible, si l'on souhaite détecter un nombre élevé de catégories différents, d'apprendre d'autres CNN, qu'ils soient chacun commun à plusieurs bases de données ou spécifique à une base de données. Par exemple ou pourrait avoir un premier CNN commun détecteur multi-catégories, et un deuxième CNN détecteur dédié à une autre catégorie complexe à identifier apprise par conséquent sur une base de données particulière.

Alternativement ou en complément, l'apprentissage du ou des CNN peut être mis en oeuvre à partir d'au moins une base d'images d'apprentissage dans lesquelles sont en outre déjà annotés des structures géométriques caractéristiques, en particulier les structures géométriques caractéristiques d'au moins une catégorie donnée (la première catégorie).

Comme expliqué avant, le CNN comprend alors une couche d'encodage pour la génération d'un vecteur de représentation des éléments d'intérêt à détecter comprenant pour au moins ladite première catégorie d'élément d'intérêt à détecter, au moins une (avantageusement trois, en particulier cordonnées et visibilité) valeur descriptive d'au moins une (avantageusement trois) structure géométrique caractéristique (en particulier point caractéristique) de ladite première catégorie d'élément d'intérêt. On comprendra à nouveau que toutes les structures géométriques caractéristiques ne sont pas forcément visibles et que naturellement seuls celles qui le sont peuvent être détectées. Ainsi, même si l'on tente de détecter trois points caractéristiques, on n'y arrivera pas forcément pour les trois (mais on indiquera alors le ou lesquels ne sont pas visibles).

*Détection et association*

La présente invention concerne en particulier un procédé d'association d'éléments d'intérêt visibles dans une vidéo constituée d'une séquence de *K* images, mis en oeuvre par les moyens de traitement de données 21 du terminal 2, en vue de faire du suivi.

En référence à la figure 3, le présent procédé d'association commence par une étape (a) d'association de chaque élément d'intérêt d'une première catégorie visible dans une *k-ième* image de ladite vidéo (frame) avec un élément d'intérêt d'une deuxième catégorie différente de la première catégorie visible dans la *k-ième* image. L'idée est de comprendre qu'il s'agit d'une « pré-association » qui se base uniquement sur la *k-ième* image prise isolément (sans tenir compte du reste de la vidéo), qui peut donc être fausse, et qui va ainsi être évaluée et le cas échéant corrigée.

On rappelle que deux éléments associés sont considérés comme étant liés à, et en particulier faisant partie de, la même entité, comme expliqué précédemment.

On notera qu'il est toujours possible qu'il reste un élément du premier ou de la deuxième catégorie « orphelin » s'il n'y pas le même nombre d'éléments du premier et de la deuxième catégorie ayant été détectés, i.e. si par exemple celui avec lequel un élément aurait dû être associé est masqué ou que la détection n'a pas fonctionné. Par exemple, dans la figure 1a, le bébé n'est pas détecté (seul son visage l'est) et on a donc un visage orphelin.

Chaque élément d'intérêt est avantageusement référencé avec un identifiant, et de façon préférée l'association de deux éléments se traduit en associant au second l'identifiant du premier (i.e. les deux sont référencés sous le même identifiant).

Il est connu de se baser sur les associations pour réaliser le suivi, mais comme expliqué le suivi peut être faussé si une mauvaise association survient. Ainsi, le présent procédé met en oeuvre une correction des associations frame par frame. En effet, si une association pour une image prise isolément peut être optimale, celle-ci est peut-être incohérente avec les images précédentes. Plus précisément, on suppose une association obtenue grâce à l'étape (a), et cette association va être étudiée

De façon préférée, le procédé est répété itérativement pour chaque image $k \in [\![1; K]\!]$ de la vidéo de sorte à réaliser l'association en continu puis le suivi, même si on comprendra qu'il peut être mis en oeuvre seulement de temps en temps pour corriger les associations. Dans la présente description, on prendra l'exemple de l'enchainement des images *k* et *k+1,* mais on pourra naturellement transposer à tout couple d'images successives.

De façon préférée l'étape (a) comprend la détection d'au moins un élément d'intérêt d'une première catégorie visible dans ladite k-ième image et au moins un élément d'intérêt d'une deuxième catégorie visible dans ladite k-ième image.

L'homme du métier pourra utiliser toute technique connue pour mettre en oeuvre cette détection, et en particulier un CNN comme expliqué, préférentiellement entraîné grâce à un procédé d'apprentissage tel que décrit précédemment.

Selon un premier mode de réalisation, on utilise un CNN adapté pour chaque catégorie. En d'autres termes, on traite autant de fois chaque image qu'il y a de catégories attendues de sorte à détecter tous les éléments d'intérêt de toutes les catégories.

Selon le deuxième mode, on utilise au moins un CNN commun « multi-types » pour tout ou partie des catégories à détecter.

Ensuite, chaque élément d'intérêt de la première catégorie détecté dans ladite *k*-ième image est associé avec un élément d'intérêt de la deuxième catégorie détecté dans ladite *k*-ième image. L'association peut être mise en oeuvre de façon classique (typiquement par détection d'inclusion d'un deuxième élément dans le premier élément), mais de façon particulièrement préférée, on utilisera un procédé innovant d'association d'éléments d'intérêt dans une image, impliquant le CNN à vecteur de représentation allongé décrit ci-avant.

Dans ce mode de réalisation, est détecté au moins un élément d'intérêt d'une première catégorie, au moins un élément d'intérêt d'une deuxième catégorie différente de la première, ainsi que pour chaque élément d'intérêt de la première catégorie détecté, la ou les structures géométriques caractéristiques de ladite première catégorie d'élément d'intérêt (i.e. la ou les structures géométriques caractéristiques associées à chaque élément de la première catégorie), visibles dans ladite image.

Ceux-ci sont choisis tels que la deuxième catégorie est une sous-partie de la première catégorie, et que les structures géométriques caractéristiques de la première catégorie d'élément d'intérêt sont également des structures géométriques caractéristiques de la deuxième catégorie d'élément d'intérêt. Comme déjà expliqué, cela est par exemple le cas des points du visage tels que le nez et les yeux.

Alors, suite à la détection, pour chaque paire d'un premier élément d'intérêt de la première catégorie détecté et d'un deuxième élément d'intérêt de la deuxième catégorie détecté, est préférentiellement calculé un score de recouvrement entre une boite dudit deuxième élément et la ou les structures géométriques caractéristiques de ladite première catégorie d'élément d'intérêt pour le premier élément.

L'idée astucieuse est de ne pas comparer directement les éléments de la première catégorie et les éléments de la deuxième catégorie, mais partant du principe que la deuxième catégorie est une sous-partie de la première catégorie et que les structures géométriques caractéristiques de la première catégorie d'élément d'intérêt sont également des structures géométriques caractéristiques de la deuxième catégorie d'élément d'intérêt, de comparer directement les structures géométriques caractéristiques de la première catégorie avec les éléments de la deuxième catégorie : les structures géométriques caractéristiques peuvent être vues comme une « deuxième détection » d'un élément de la deuxième catégorie, qu'il est facile de mettre en correspondance avec celui-ci.

Par « score de recouvrement », on entend toute métrique représentative de la correspondance entre une boite et des structures géométriques caractéristiques, i.e. croissante lorsque les structures géométriques caractéristiques sont de plus en plus incluses dans la boite.

Selon un premier mode de réalisation, le score de recouvrement d'une paire d'un premier élément avec un deuxième élément peut être simplement égal au nombre de structures géométriques caractéristiques pour le premier élément qui sont incluses dans la boite du deuxième élément (éventuellement normalisé en divisant par le nombre total de structures géométriques caractéristiques). Par exemple, dans l'exemple de la figure 1b, on a un score de recouvrement de 1/3 avec chacun des visages de la mère et de l'enfant puisque chacune des boites correspondantes inclut un point caractéristique de la mère (en l'espèce le nez ou l'oeil gauche, l'oeil droit n'étant pas visible).

Selon un deuxième mode, en particulier si trois structures géométriques caractéristiques, et notamment des points caractéristiques, sont détectés, le score est un taux de recouvrement entre ladite boite du deuxième élément et une enveloppe convexe des structures géométriques caractéristiques de ladite première catégorie d'élément d'intérêt pour le premier élément, c'est-à-dire un rapport basé sur les surfaces correspondantes. On voit dans la **figure 6b** ladite enveloppe convexe de trois points caractéristiques de ladite première catégorie d'élément d'intérêt pour le premier élément dans un exemple d'image.

On pourra utiliser de façon très avantageuse le critère de Jaccard, c'est-à-dire le rapport entre l'intersection (de la boite et de l'enveloppe convexe) et l'union (de la boite et de l'enveloppe convexe), appelé aussi en anglais « Intersection Over Union » (IOU).

Par exemple, en notant $KP_{icvx}$ l'enveloppe convexe des structures géométriques caractéristiques pour le *i-ième* élément d'intérêt de la première catégorie et $F_j$ le *j-ième* élément d'intérêt de la deuxième catégorie, alors le score

$$scIOU_{ij} = \frac{F_j \cap KP_{icvx}}{F_j \cup KP_{icvx}}$$

de recouvrement est donné par la formule $\qquad$ .

Enfin, peut être mis en oeuvre d'un algorithme d'optimisation combinatoire en fonction des scores de recouvrement calculés de sorte à associer chaque élément d'intérêt de la première catégorie détecté avec un élément d'intérêt de la deuxième catégorie détecté.

Par algorithme d'optimisation combinatoire, (on dit aussi d'optimisation discrète), on entend un algorithme capable de trouver une solution globale au problème d'association, i.e. de trouver la combinaison de paires optimale parmi toutes les combinaisons possibles de paires, optimale étant entendu en termes de « cout total » : on pourra se baser par exemple sur un coût par exemple 1 - $scIOU_{ij}$ (et de façon générale toute fonction décroissante : plus le score de recouvrement est élevé, plus le coût d'association est faible).

De nombreux algorithmes d'optimisation combinatoire sont connus, et de façon préférée on utilisera l'algorithme hongrois qui est particulièrement adapté au cas d'espèce (alternativement, on pourra citer par exemple l'algorithme de Ford-Fulkerson).

A noter qu'on pourra toujours utiliser un algorithme d'optimisation « naïf » dans lequel on se contente d'associer à chaque élément de la première catégorie l'élément de la deuxième catégorie avec lequel le score de recouvrement est maximal, bien que des boites très proches (cas typique des visages) ainsi que des imprécisions sur la détection des structures géométriques caractéristiques peuvent entrainer des erreurs d'association.

*Cout d'association*

Dans une étape (b), les moyens de traitement de données 21 calculent un « coût d'association » de chaque paire d'un élément d'intérêt de la première catégorie détecté dans au moins une image avec un élément d'intérêt de la deuxième catégorie détecté dans au moins une image, en fonction d'au moins des compteurs d'association de chaque paire d'un élément d'intérêts de la première catégorie avec un élément d'intérêt de la deuxième catégorie.

Il est à noter que si l'étape (b) est typiquement mise en oeuvre uniquement pour les éléments d'intérêt détectés (déjà associés) dans l'actuelle *k-ième* image, elle peut très avantageusement aussi inclure les éventuels éléments détectés dans l'image précédente la (*k-1-ième*) mais « disparus » (non visibles), voire même tous les éléments d'intérêts ayant au moins un compteur d'association à valeur non-nulle (avec un des éléments détectés dans l'actuelle *k-ième* image), voir plus loin.

De façon préférée, on adopte une position intermédiaire en prévoyant qu'un coût d'association est calculé pour chaque paire d'un élément d'une catégorie détecté dans la *k-ième* image avec un élément d'intérêt d'une autre catégorie présentant avec cet élément un compteur d'association non-nul, i.e. un coût d'association est calculé pour chaque paire d'un élément de la première catégorie détecté dans la *k-ième* image avec un élément d'intérêt de la deuxième catégorie déjà détecté dans au moins une image de la vidéo tel que le compteur d'association de ladite paire n'est pas nul, et pour chaque paire d'un élément de la deuxième catégorie détecté dans la *k-ième* image avec un élément d'intérêt de la première catégorie déjà détecté dans au moins une image de la vidéo tel que le compteur d'association de ladite paire n'est pas nul.

Par compteur d'association d'une paire d'éléments d'intérêt de deux catégories différentes, on entend un entier naturel représentant en particulier le nombre de fois que les deux éléments de cette paire ont été préalablement associés. Le compteur d'association d'une paire est typiquement incrémenté pour chaque image dans laquelle l'association est obtenue, et dans le cas contraire maintenu voire avantageusement décrémenté (le compteur étant toujours au moins égal à 0). Une mise à jour « provisoire » des compteurs peut avoir lieu après l'association de l'étape (a).

On comprend qu'il peut exister autant de compteurs que de paires possibles. Dans l'exemple où on a quatre éléments d'intérêt de la première catégorie référencés $P_{i, i \in [\![1;4]\!]}$ (catégorie personne), et trois éléments d'intérêt de la deuxième catégorie référencés $F_{j, j \in [\![1;3]\!]}$ (catégorie visage), on peut avoir jusqu'à douze compteurs d'association notés $ac_{ij, \{i,j\} \in [\![1;4]\!] \times [\![1;3]\!]}$. A noter que préférentiellement, dans la mesure où la grande majorité des combinaisons n'existeront jamais, on ne tient que les compteurs d'une association ayant eu lieu au moins une fois dans la vidéo.

Dans un cas où il y a plus de deux catégories d'élément d'intérêt qui peuvent être associés (par exemple, personne/visage/main), on utilise un ensemble de compteurs d'association par entité (dans l'exemple des compteurs personne/main et des compteurs personne/visage).

Le cout d'association peut être compris comme l'application d'une fonction de coût aux compteurs d'associations. Il est représentatif d'un « coût » nécessaire pour réaliser une association parmi toutes les associations, i.e. sa difficulté, et permet d'exprimer le compteur d'une paire par rapport à tous les compteurs. Ainsi, plus le coût d'association est faible pour une paire donnée, plus cette association est susceptible d'être la bonne.

L'homme du métier pourra utiliser n'importe quelle fonction de coût connue. Selon un premier mode de réalisation, le coût d'association est fonction uniquement des compteurs d'association.

En notant $C_{ij}$ le coût d'association du *i-ième* élément d'intérêt de la première catégorie avec le *j-ième* élément d'intérêt de la deuxième catégorie ($F_i - P_j$), avec *n* le nombre d'éléments de la première catégorie et m le nombre d'éléments d'intérêts de la deuxième catégorie, on peut utiliser par exemple les formules suivantes :

$$C_{ij} = 1 - \frac{2 * ac_{ij}}{\sum_{l=0}^{n} ac_{il} + \sum_{l=0}^{m} ac_{lj}}$$

$$C_{ij} = \sum_{l \neq j}^{n} ac_{il} + \sum_{l \neq i}^{m} ac_{lj}$$

Ces formules traduisent une certaine « inertie » des associations passées. Plus précisément, on voit que le coût pour maintenir une paire est toujours plus faible que le coût pour créer une nouvelle paire. Les compteurs d'association agissent comme un historique et l'utilisation des fonctions de coût permet ainsi de favoriser la stabilité.

Selon un deuxième mode de réalisation, les compteurs d'association sont pondérés par des scores de détection (on note $sd_{i/j}$ respectivement les scores de détection du i-ième élément de la première catégorie et du j-ième élément de la deuxième catégorie), i.e. le coût d'association est fonction (uniquement) des compteurs d'association et des scores de détection. On peut utiliser par exemple les formules suivantes :

$$C_{ij} = 1 - \frac{2 * ac_{ij} * sd_i * sd_j}{\sum_{l=0}^{n} sd_i ac_{il} + \sum_{l=0}^{m} sd_j ac_{lj}}$$

$$C_{ij} = \sum_{l \neq j}^{n} sd_i ac_{il} + \sum_{l \neq i}^{m} sd_j ac_{lj}$$

On pourra encore alternativement utiliser le score de recouvrement tel que présenté précédemment, avec par exemple les formules :

$$C_{ij} = 1 - \frac{2 * ac_{ij} * scIOU_{ij}}{\sum_{l=0}^{n} scIOU_{il} ac_{il} + \sum_{l=0}^{m} scIOU_{lj} ac_{lj}}$$

$$C_{ij} = \sum_{l \neq j}^{n} scIOU_{il} ac_{il} + \sum_{l \neq i}^{m} scIOU_{lj} ac_{lj}$$

La pondération par des scores permet de limiter l'effet d'inertie et de quand même favoriser la création d'une nouvelle paire en cas de scores particulièrement élevés.

*Optimisation combinatoire et mise à jour*

Dans une étape (c), les moyens de traitement de données 21 mettent en oeuvre un algorithme d'optimisation combinatoire en fonction des coûts d'association calculés de sorte à réassocier chaque élément d'intérêt de la première catégorie détectés dans ladite *k*-ième image avec un élément d'intérêt de la deuxième catégorie détectés dans ladite *k*-ième image. Il s'agit d'une « vérification » de l'association initiale de l'étape (a), et il a tout fait possible que l'étape (c) ne fasse que confirmer celle-ci.

On pourra utiliser ici le même algorithme d'optimisation que ceux décrits précédemment pour le mode de réalisation préféré de l'association de l'étape (a), mais pas nécessairement.

De façon préférée on utilisera à nouveau l'algorithme hongrois qui est particulièrement adapté au cas d'espèce (alternativement, on pourra citer par exemple l'algorithme de Ford-Fulkerson).

De façon préférée, l'étape (c) comprend en outre la réaffectation d'identifiants aux éléments d'intérêt détectés dans ladite k-ième image. En effet, si à nouveau l'étape (c) est typiquement mise en oeuvre uniquement pour les éléments d'intérêt détectés (déjà associés) dans l'actuelle *k-ième* image, au moins l'algorithme d'optimisation combinatoire peut très avantageusement aussi inclure les éventuels éléments détectés dans l'image précédente la (*k-1-ième*) mais « disparus » (non visibles), voire même tous les éléments d'intérêts ayant au moins un compteur d'association à valeur non-nulle (avec un des éléments détectés dans l'actuelle *k-ième* image), et de façon générale tous les éléments d'intérêts impliqués dans une paire pour lesquels un coût d'association a été calculé à l'étape (b).

En effet, si naturellement on ne peut associer que des éléments visibles, il est possible qu'à l'issue de l'étape (c), l'algorithme d'optimisation combinatoire mette en correspondance un élément visible avec un autre pourtant « plus visible ». Cette situation signifie que l'un des éléments d'intérêt visible (en l'espèce celui associé à l'issue de l'étape (a) est un doublon avec l'autre élément d'intérêt qui non visible). On verra plus loin un exemple d'un tel cas et comment cela fonctionne.

Dans une dernière étape (d), les compteurs d'association sont mis à jour selon le résultat des associations. Cela peut tenir compte d'une éventuelle mise à jour provisoire suite à l'étape (a). Comme expliqué il s'agit d'entiers naturels, de sorte ladite mise à jour est par incrémentation et/ou décrémentation (bien entendu la valeur d'un certain nombre de compteurs peut par ailleurs rester identique). En d'autres termes, chaque compteur peut être incrémenté, maintenu non modifié, ou décrémenté, i.e. la valeur d'un compteur varie d'un pas entier (valeur après mise à jour égale valeur avant mise à jour plus un entier relatif, qui peut être nul ou négatif).

Dans cette mise à jour, au moins les compteurs d'association des paires obtenues (créées ou maintenues) sont incrémentés, et avantageusement ceux (encore non-nuls) des paires non-obtenues (en particulier abandonnées) sont décrémentés de façon à amplifier l'effet. Comme expliqué ci-avant, les compteurs ne descendent pas négativement, et donc tous les compteurs « nuls » sont ignorés.

*Correction d'association*

Un cas de « mauvaise association » peut survenir si par exemple le visage d'une personne est mal placé dans la *k-ième* image, de sorte que le visage d'une autre personne lui est associé par erreur (voir la figure 4a). Le présent procédé permet de rectifier cette erreur.

Plus précisément, si l'étape (a) comprend la détection dans la k-ième image d'au moins un premier élément d'intérêt, un deuxième élément d'intérêt et un troisième élément d'intérêt, le premier élément d'intérêt étant de la première catégorie et les deuxième et troisième éléments d'intérêt étant de la deuxième catégorie, et si le premier élément d'intérêt est associé au deuxième élément d'intérêt, l'étape (c) comprend en fonction du résultat de la mise en oeuvre dudit algorithme d'optimisation combinatoire :

- Soit le maintien de l'association du premier élément d'intérêt avec le deuxième élément (l'association est confirmée, cas de la paire $P_1$-$F_1$ dans la figure 4a), le compteur d'association du premier élément d'intérêt avec le deuxième élément d'intérêt étant alors incrémenté (et le compteur d'association du premier élément d'intérêt avec le troisième élément d'intérêt étant décrémenté) dans l'étape (d) ;
- Soit la réassociation du premier élément d'intérêt avec le troisième élément d'intérêt à la place du deuxième élément d'intérêt (détection de la mauvaise association et rectification, typiquement ce qui survient si le compteur d'association du premier élément avec le troisième élément est plus élevé que le compteur d'association du premier élément avec le deuxième élément, cas de la paire $P_2$-$F_2$ dans la figure 4a), le compteur d'association du premier élément d'intérêt avec le troisième élément d'intérêt étant alors incrémenté (le compteur d'association du premier élément d'intérêt avec le deuxième élément d'intérêt étant décrémenté) dans l'étape (d).

*Fusion de tracks*

Un cas de « duplication de track » peut survenir si une même entité se voit détectée successivement comme deux éléments d'intérêts distincts, i.e. référencés par deux identifiants différents (une track a été créée inutilement), ce qui est souvent une conséquence d'une mauvaise association (l'élément d'intérêt « non-associé » débute une nouvelle track). Le présent procédé va permettre de fusionner ces deux éléments en forçant une association avec l'élément « original », ce qui va entraîner la disparition progressive du doublon. On comprend qu'en pratique on ne change pas l'affectation, mais seulement l'identifiant du doublon.

Cela est permis par le fait de considérer dans l'algorithme d'optimisation de l'étape (c) des éléments non-détectés mais présentant un compteur d'association avec un élément détecté qui soit non-nul (i.e. ils ont déjà été récemment associés avec un élément visible, mais n'apparaissent pas, ce qui est suspect).

Ainsi, si l'étape (a) comprend la détection dans la k-ième image d'au moins un premier élément d'intérêt et un deuxième élément d'intérêt, mais pas celle d'un troisième élément d'intérêt, le premier élément d'intérêt étant de la première catégorie et le deuxième élément d'intérêt et le troisième élément d'intérêt étant de la deuxième catégorie, et si le premier élément d'intérêt est associé au deuxième élément d'intérêt, l'étape (c) comprend en fonction du résultat de la mise en oeuvre dudit algorithme d'optimisation combinatoire :

- Soit le maintien « normal » de l'association du premier élément d'intérêt avec le deuxième élément (l'association est confirmée, c'est-à-dire que l'ancienne association du premier élément avec le troisième était une erreur), le compteur d'association du premier élément d'intérêt avec le deuxième élément d'intérêt étant alors incrémenté (le compteur d'association du premier élément d'intérêt avec le troisième élément d'intérêt étant alors décrémenté) dans l'étape (d) ;
- Soit la réaffectation de l'identifiant du troisième élément d'intérêt au deuxième élément d'intérêt (on comprend que l'association du premier élément avec le deuxième élément n'était pas fausse, mais que ce dernier ne fait qu'un avec le troisième élément, et donc on récupère sa track - typiquement ce qui survient si le compteur d'association du premier élément avec le troisième élément est plus élevé que le compteur d'association du premier élément avec le deuxième élément, cas de la paire $P_4$/$P_1$-$F_1$ dans la figure 4a), le compteur d'association du premier élément d'intérêt avec le troisième élément d'intérêt étant alors incrémenté (le compteur d'association du deuxième élément peut être décrémenté, voire directement mis à zéro pour supprimer cette track) dans l'étape (d).

*Produit programme d'ordinateur*

Selon un deuxième et un troisième aspects, l'invention concerne un produit programme d'ordinateur comprenant des instructions de code pour l'exécution (en particulier sur les moyens de traitement de données 11a, 11b, 11c, 21 d'un ou plusieurs serveurs 1a, 1b, 1c ou du terminal 2) d'un procédé selon le premier aspect de l'invention d'association d'éléments d'intérêt visibles dans une vidéo ; ainsi que des moyens de stockage lisibles par un équipement informatique (une mémoire 12a, 12b, 12c, 22 d'un ou plusieurs serveurs 1a, 1b, 1c ou du terminal 2) sur lequel on trouve ce produit programme d'ordinateur.

**Revendications**

1. Procédé d'association d'éléments d'intérêt visibles dans une vidéo constituée d'une séquence de *K* images, **caractérisé en ce qu'**il comprend la mise en oeuvre par des moyens de traitement de données (21) d'un terminal (2), pour une *k-ième* image de ladite vidéo, d'étapes de :

(a) Détection et identification d'au moins un élément d'intérêt d'une première catégorie visible dans ladite *k-ième* image et d'au moins un élément d'intérêt d'une deuxième catégorie différente de la première catégorie visible dans ladite *k-ième* image, l'une de la première et de la deuxième catégorie d'élément d'intérêt étant une sous-partie de l'autre ; et, si un élément d'intérêt de la première catégorie détecté dans ladite *k-ième* image et un élément d'intérêt de la deuxième catégorie détecté dans ladite *k-ième* image sont considérés comme faisant partie de la même entité, association dudit élément d'intérêt de la première catégorie détecté dans ladite *k-ième* image avec ledit élément d'intérêt de la deuxième catégorie détecté dans ladite *k-ième* image ;

(b) Calcul d'un coût d'association d'une pluralité de paires possibles d'un élément d'intérêt de la première catégorie visible dans au moins une image de la vidéo avec un élément d'intérêt de la deuxième catégorie visible dans au moins une image de la vidéo, en fonction d'au moins des compteurs d'association de chaque paire possible d'un élément d'intérêt de la première catégorie avec un élément d'intérêt de la deuxième catégorie, le compteur d'association d'une paire d'éléments d'intérêt représentant le nombre de fois que les deux éléments de cette paire ont été préalablement associés dans la vidéo ;

(c) Mise en oeuvre d'un algorithme d'optimisation combinatoire en fonction des coûts d'association calculés de sorte à déterminer une combinaison optimale de paires d'un élément d'intérêt de la première catégorie détecté dans ladite *k-ième* image avec un élément d'intérêt de la deuxième catégorie détecté dans ladite *k-ième* image, et, pour chaque paire de ladite combinaison optimale, réassociation dudit élément d'intérêt de la première catégorie visible dans ladite *k-ième* image avec ledit élément d'intérêt de la deuxième catégorie visible dans ladite *k-ième* image de la paire ;

(d) Mise à jour des compteurs d'association par incrémentation et/ou décrémentation.

2. Procédé selon la revendication 1, répété itérativement pour chaque image $k \in [\![1;K]\!]$ de la vidéo.

3. Procédé selon l'une des revendications 1 et 2, dans lequel soit l'une de la première et de la deuxième catégorie est la catégorie visage et l'autre est la catégorie personne, soit l'une de la première et de la deuxième catégorie est la catégorie plaque d'immatriculation et l'autre est la catégorie véhicule ou une sous-catégorie de la catégorie véhicule.

4. Procédé selon l'une des revendications 1 à 3, dans lequel ledit algorithme d'optimisation combinatoire est l'algorithme hongrois.

5. Procédé selon l'une des revendications 1 à 4, dans lequel la détection de l'étape (a) est mise en oeuvre au moyen d'au moins un réseau de neurones à convolution, CNN.

6. Procédé selon l'une des revendications 1 à 5, dans lequel un coût d'association est calculé à l'étape (b) pour chaque paire d'un élément d'intérêt de la première catégorie détecté dans la *k-ième* image avec un élément d'intérêt de la deuxième catégorie déjà détecté dans au moins une image de la vidéo tel que le compteur d'association de ladite paire n'est pas nul, et pour chaque paire d'un élément d'intérêt de la deuxième catégorie détecté dans la *k-ième* image avec un élément d'intérêt de la première catégorie déjà détecté dans au moins une image de la vidéo tel que le compteur d'association de ladite paire n'est pas nul.

7. Procédé selon l'une des revendications 1 à 6, dans lequel chaque élément d'intérêt est référencé avec un identifiant, deux éléments d'intérêt associés étant référencés avec le même identifiant.

8. Procédé selon la revendication 7, dans lequel, si l'étape (a) comprend la détection et l'identification dans la *k-ième* image d'au moins un premier élément d'intérêt et un deuxième élément d'intérêt, mais pas celle d'un troisième élément d'intérêt, le premier élément d'intérêt étant de la première catégorie et le troisième élément d'intérêt étant de la deuxième catégorie, et si le premier élément d'intérêt est associé au deuxième élément d'intérêt, l'étape (c) comprend en fonction du résultat de la mise en oeuvre dudit algorithme d'optimisation combinatoire :

- Soit le maintien de l'association du premier élément d'intérêt avec le deuxième élément, le compteur d'association du premier élément d'intérêt avec le deuxième élément d'intérêt étant alors incrémenté dans l'étape (d) ;
- Soit la réaffectation de l'identifiant du troisième élément d'intérêt au deuxième élément d'intérêt, le compteur d'association du premier élément d'intérêt avec le troisième élément d'intérêt étant alors incrémenté dans l'étape (d).

9. Procédé selon l'une des revendications 1 à 8, dans lequel, si l'étape (a) comprend la détection et l'identification dans la *k*-ième image d'au moins un premier élément d'intérêt, un deuxième élément d'intérêt et un troisième élément d'intérêt, le premier élément d'intérêt étant de la première catégorie et les deuxième et troisième éléments d'intérêt étant de la deuxième catégorie, et si le premier élément d'intérêt est associé au deuxième élément d'intérêt, l'étape (c) comprend en fonction du résultat de la mise en oeuvre dudit algorithme d'optimisation combinatoire :

- Soit le maintien de l'association du premier élément d'intérêt avec le deuxième élément, le compteur d'association du premier élément d'intérêt avec le deuxième élément d'intérêt étant alors incrémenté dans l'étape (d) ;
- Soit la réassociation du premier élément d'intérêt avec le troisième élément d'intérêt à la place du deuxième élément d'intérêt, le compteur d'association du premier élément d'intérêt avec le troisième élément d'intérêt étant alors incrémenté dans l'étape (d).

10. Procédé selon l'une des revendications 8 et 9, dans lequel un compteur d'association non-incrémenté est décrémenté à l'étape (d).

11. Procédé selon l'une des revendications 1 à 10, dans lequel, le coût d'association du *i-ième* élément d'intérêt de la première catégorie visible dans ladite *k-ième* image avec le *j-ième* élément d'intérêt de la deuxième catégorie visible dans ladite *k-ième* image, est obtenu à l'étape (b) par l'une des formules suivantes :

$$C_{ij} = 1 - \frac{2*ac_{ij}}{\sum_{l=0}^{n} ac_{il} + \sum_{l=0}^{m} ac_{lj}}, \qquad C_{ij} = \sum_{l \neq j}^{n} ac_{il} + \sum_{l \neq i}^{m} ac_{lj}, \qquad C_{ij} = 1 - \frac{2*ac_{ij}*sd_i*sd_j}{\sum_{l=0}^{n} sd_i ac_{il} + \sum_{l=0}^{m} sd_j ac_{lj}}$$

ou $C_{ij} = \sum_{l \neq j}^{n} sd_i ac_{il} + \sum_{l \neq i}^{m} sd_j ac_{lj}$ ; avec *n* le nombre d'éléments d'intérêts de la première catégorie et *m* le nombre d'éléments d'intérêt de la deuxième catégorie visibles dans ladite *k-ième* image, et $sd_{i/j}$ respectivement les scores de détection dudit *i-ième* élément d'intérêt de la première catégorie et dudit *j-ième* élément d'intérêt de la deuxième catégorie.

12. Produit programme d'ordinateur comprenant des instructions de code pour l'exécution d'un procédé selon l'une des revendications 1 à 11 d'association d'éléments d'intérêt visibles dans une vidéo, lorsque ledit programme est exécuté par un ordinateur.

13. Moyen de stockage lisible par un équipement informatique sur lequel un produit programme d'ordinateur comprend des instructions de code pour l'exécution d'un procédé selon l'une des revendications 1 à 11 d'association d'éléments d'intérêt visibles dans une vidéo.

**Patentansprüche**

1. Verfahren zur Assoziation von in einem aus einer Folge von K Bildern bestehenden Video sichtbaren interessierenden Elementen, **dadurch gekennzeichnet, dass** es die Durchführung, durch Datenverarbeitungseinrichtungen (21) eines Endgeräts (2), für ein k-tes Bild des Videos, von Schritten enthält:

(a) Erkennung und Identifizierung mindestens eines im k-ten Bild sichtbaren interessierenden Elements einer ersten Kategorie und mindestens eines im k-ten Bild sichtbaren interessierenden Elements einer zweiten Kategorie anders als die erste Kategorie, wobei die eine der ersten und der zweiten Kategorie eines interessierenden Elements ein Unterbereich der anderen ist; und wenn ein im k-ten Bild erkanntes interessierendes Element der ersten Kategorie und ein im k-ten Bild erkanntes interessierendes Element der zweiten Kategorie als Teil der gleichen Entität angesehen werden, Assoziation des im k-ten Bild erkannten interessierenden Elements der ersten Kategorie mit dem im k-ten Bild erkannten interessierenden Element der zweiten Kategorie;
(b) Berechnung von Assoziationskosten einer Vielzahl von möglichen Paaren eines in mindestens einem Bild des Videos sichtbaren interessierenden Elements der ersten Kategorie mit einem in mindestens einem Bild des Videos sichtbaren interessierenden Element der zweiten Kategorie, abhängig von mindestens Assoziationszählern jedes möglichen Paars eines interessierenden Elements der ersten Kategorie mit einem interessierenden Element der zweiten Kategorie, wobei der Assoziationszähler eines Paars von interessierenden Elementen die Anzahl von Malen darstellt, die die zwei Elemente dieses Paars vorher in dem Video assoziiert wurden;

(c) Anwendung eines kombinatorischen Optimierungsalgorithmus abhängig von den berechneten Assoziationskosten, um eine optimale Kombination von Paaren eines im k-ten Bild erkannten interessierenden Elements der ersten Kategorie mit einem im k-ten Bild erkannten interessierenden Element der zweiten Kategorie zu bestimmen, und für jedes Paar der optimalen Kombination, Reassoziation des im k-ten Bild sichtbaren interessierenden Elements der ersten Kategorie mit dem im k-ten Bild sichtbaren interessierenden Element der zweiten Kategorie des Paars;

(d) Aktualisierung der Assoziationszähler durch Inkrementieren oder Dekrementieren.

2. Verfahren nach Anspruch 1, das iterativ für jedes Bild $k \in [\![1; K]\!]$ des Videos wiederholt wird.

3. Verfahren nach einem der Ansprüche 1 und 2, wobei entweder die eine der ersten und der zweiten Kategorie die Gesicht-Kategorie und die andere die Person-Kategorie ist, oder die eine der ersten und der zweiten Kategorie die Nummernschild-Kategorie und die andere die Fahrzeug-Kategorie oder eine Unterkategorie der Fahrzeug-Kategorie ist.

4. Verfahren nach einem der Ansprüche 1 bis 3, wobei der kombinatorische Optimierungsalgorithmus die Ungarische Methode ist.

5. Verfahren nach einem der Ansprüche 1 bis 4, wobei die Erkennung des Schritts (a) mittels mindestens eines neuronalen Faltungsnetzwerks CNN angewendet wird.

6. Verfahren nach einem der Ansprüche 1 bis 5, wobei Assoziationskosten im Schritt (b) für jedes Paar eines im k-ten Bild erkannten interessierenden Elements der ersten Kategorie mit einem in mindestens einem Bild des Videos bereits erkannten interessierenden Element der zweiten Kategorie derart berechnet werden, dass der Assoziationszähler des Paars nicht null ist, und für jedes Paar eines im k-ten Bild erkannten interessierenden Elements der zweiten Kategorie mit einem in mindestens einem Bild des Videos bereits erkannten interessierenden Element der ersten Kategorie derart berechnet wird, dass der Assoziationszähler des Paars nicht null ist.

7. Verfahren nach einem der Ansprüche 1 bis 6, wobei jedes interessierende Element mit einer Kennung referenziert ist, wobei zwei assoziierte interessierende Elemente mit der gleichen Kennung referenziert sind.

8. Verfahren nach Anspruch 7, wobei, wenn der Schritt (a) die Erkennung und Identifizierung mindestens eines ersten interessierenden Elements und eines zweiten interessierenden Elements im k-ten Bild, aber nicht diejenige eines dritten interessierenden Elements enthält, wobei das erste interessierende Element von der ersten Kategorie ist und dass dritte interessierende Element von der zweiten Kategorie ist, und wenn das erste interessierende Element mit dem zweiten interessierenden Element assoziiert ist, der Schritt (c) abhängig vom Ergebnis der Anwendung des kombinatorischen Optimierungsalgorithmus enthält:

- entweder die Aufrechterhaltung der Assoziation des ersten interessierenden Elements mit dem zweiten Element, wobei der Assoziationszähler des ersten interessierenden Elements mit dem zweiten interessierenden Element dann im Schritt (d) inkrementiert wird;
- oder die Neuzuteilung der Kennung des dritten interessierenden Elements zum zweiten interessierenden Element, wobei der Assoziationszähler des ersten interessierenden Elements mit dem dritten interessierenden Element dann im Schritt (d) inkrementiert wird.

9. Verfahren nach einem der Ansprüche 1 bis 8, wobei, wenn der Schritt (a) die Erkennung und Identifizierung mindestens eines ersten interessierenden Elements, eines zweiten interessierenden Elements und eines dritten interessierenden Elements im k-ten Bild enthält, wobei das erste interessierende Element von der ersten Kategorie ist und die zweiten und dritten interessierenden Elemente von der zweiten Kategorie sind, und wenn das erste interessierende Element mit dem zweiten interessierenden Element assoziiert ist, der Schritt (c) abhängig vom Ergebnis der Anwendung des kombinatorischen Optimierungsalgorithmus enthält:

- entweder die Aufrechterhaltung der Assoziation des ersten interessierenden Elements mit dem zweiten Element, wobei der Assoziationszähler des ersten interessierenden Elements mit dem zweiten interessierenden Element dann im Schritt (d) inkrementiert wird;

- oder die Reassoziation des ersten interessierenden Elements mit dem dritten interessierenden Element anstelle des zweiten interessierenden Elements, wobei der Assoziationszähler des ersten interessierenden Elements mit dem dritten interessierenden Element dann im Schritt (d) inkrementiert wird.

10. Verfahren nach einem der Ansprüche 8 und 9, wobei ein nicht inkrementierter Assoziationszähler im Schritt (d) dekrementiert wird.

11. Verfahren nach einem der Ansprüche 1 bis 10, wobei die Assoziationskosten des im k-ten Bild sichtbaren i-ten interessierenden Elements der ersten Kategorie mit dem im k-ten Bild sichtbaren j-ten interessierenden Element der zweiten Kategorie im Schritt (b) durch eine der folgenden Formeln erhalten wird:

$$C_{ij} = 1 - \frac{2*ac_{ij}}{\sum_{l=0}^{n} ac_{il} + \sum_{l=0}^{m} ac_{lj}}, \qquad C_{ij} = \sum_{l \neq j}^{n} ac_{il} + \sum_{l \neq i}^{m} ac_{lj}, \qquad C_{ij} = 1 -$$

$$\frac{2*ac_{ij}*sd_i*sd_j}{\sum_{l=0}^{n} sd_i ac_{il} + \sum_{l=0}^{m} sd_j ac_{lj}} \text{ oder } C_{ij} = \sum_{l \neq j}^{n} sd_i ac_{il} + \sum_{l \neq i}^{m} sd_j ac_{lj};$$

mit n der Anzahl im k-ten Bild sichtbarer interessierender Elemente der ersten Kategorie und m der Anzahl interessierender Elemente der zweiten Kategorie, und $sd_{i/j}$ den Erkennungs-Scores des i-ten interessierenden Elements der ersten Kategorie bzw. des j-ten interessierenden Elements der zweiten Kategorie.

12. Computerprogramm, das Codeanweisungen für die Ausführung eines Verfahrens nach einem der Ansprüche 1 bis 11 der Assoziation von in einem Video sichtbaren interessierenden Elemente enthält, wenn das Programm von einem Computer ausgeführt wird.

13. Speichereinrichtung, lesbar von einer Datenverarbeitungsausrüstung, auf der ein Computerprogramme Codeanweisungen für die Ausführung eines Verfahrens nach einem der Ansprüche 1 bis 11 der Assoziation von in einem Video sichtbaren interessierenden Elemente enthält.

**Claims**

1. Method for associating elements of interest which are visible in a video which consists of a sequence of *K* images, **characterized in that** it comprises data processing means (21) of a terminal (2) implementing, for a kth image of said video, steps of:

   (a) detecting and identifying at least one element of interest of a first category which is visible in said *kth* image and at least one element of interest of a second category which is different from the first category which is visible in said *kth* image, the first or the second category of element of interest being a subpart of the other; and, if an element of interest of the first category detected in said *kth* image and an element of interest of the second category detected in said *kth* image are considered to form part of the same entity, associating said element of interest of the first category detected in said *kth* image with said element of interest of the second category detected in said *kth* image;
   (b) calculating an association cost for a plurality of possible pairs of an element of interest of the first category which is visible in at least one image of the video and an element of interest of the second category which is visible in at least one image of the video, depending on at least association counters for each possible pair of an element of interest of the first category and an element of interest of the second category, the association counter for a pair of elements of interest representing the number of times that the two elements of this pair have previously been associated in the video;
   (c) implementing a combinatorial optimization algorithm depending on the calculated association costs so as to determine an optimal combination of pairs of an element of interest of the first category detected in said *kth* image and an element of interest of the second category detected in said *kth* image, and, for each pair of said optimal combination, reassociating said element of interest of the first category which is visible in said *kth* image with said element of interest of the second category which is visible in said *kth* image of the pair;
   (d) updating the association counters incrementally and/or decrementally.

2. Method according to Claim 1, repeated iteratively for each image $k \in [\![1; K]\!]$ of the video.

3. Method according to one of Claims 1 and 2, wherein either the first or the second category is the face category and the other is the person category, or the first or the second category is the registration plate category and the other is the vehicle category or a sub-category of the vehicle category.

4. Method according to one of Claims 1 to 3, wherein said combinatorial optimization algorithm is the Hungarian algorithm.

5. Method according to one of Claims 1 to 4, wherein the detection of step (a) is implemented by means of at least one convolutional neural network, CNN.

6. Method according to one of Claims 1 to 5, wherein an association cost is calculated in step (b) for each pair of an element of interest of the first category detected in the *kth* image and an element of interest of the second category already detected in at least one image of the video such that the association counter for said pair is non-zero, and for each pair of an element of interest of the second category detected in the *kth* image and an element of interest of the first category already detected in at least one image of the video such that the association counter for said pair is non-zero.

7. Method according to one of Claims 1 to 6, wherein each element of interest is referenced with an identifier, two associated elements of interest being referenced with the same identifier.

8. Method according to Claim 7, wherein, if said step (a) comprises detecting and identifying, in the *kth* image, at least a first element of interest and a second element of interest, but not a third element of interest, the first element of interest being of the first category and the third element of interest being of the second category, and if the first element of interest is associated with the second element of interest, step (c) comprises, depending on the result of implementing said combinatorial optimization algorithm:

- either keeping the association of the first element of interest with the second element, the counter of association of the first element of interest with the second element of interest then being incremented in step (d) ;
- or reassigning the identifier of the third element of interest to the second element of interest, the counter of association of the first element of interest with the third element of interest then being incremented in step (d).

9. Method according to one of Claims 1 to 8, wherein, if step (a) comprises detecting and identifying, in the kth image, at least a first element of interest, a second element of interest and a third element of interest, the first element of interest being of the first category and the second and third elements of interest being of the second category, and if the first element of interest is associated with the second element of interest, step (c) comprises, depending on the result of implementing said combinatorial optimization algorithm:

- either keeping the association of the first element of interest with the second element, the counter of association of the first element of interest with the second element of interest then being incremented in step (d) ;
- or reassociating the first element of interest with the third element of interest instead of the second element of interest, the counter of association of the first element of interest with the third element of interest then being incremented in step (d).

10. Method according to either one of Claims 8 and 9, wherein an unincremented association counter is decremented in step (d).

11. Method according to one of Claims 1 to 10, wherein the cost of associating the *ith* element of interest of the first category which is visible in said *kth* image with the *jth* element of interest of the second category which is visible in said *kth* image is obtained in step (b) by means of one of the following formulas: $C_{ij} = 1 - \frac{2*ac_{ij}}{\sum_{l=0}^{n} ac_{il} + \sum_{l=0}^{m} ac_{lj}}$ , $C_{ij} = \sum_{l \neq j}^{n} ac_{il} + \sum_{l \neq i}^{m} ac_{lj}$ , $C_{ij} = 1 - \frac{2*ac_{ij}*sd_i*sd_j}{\sum_{l=0}^{n} sd_i ac_{il} + \sum_{l=0}^{m} sd_j ac_{lj}}$ or

$C_{ij} = \sum_{l \neq j}^{n} sd_i ac_{il} + \sum_{l \neq i}^{m} sd_j ac_{lj}$ ; with *n* being the number of elements of interest of the first category and *m* the number of elements of interest of the second category which are visible in said *kth* image, and $sd_{i/j}$ the detection scores for said *ith* element of interest of the first category and of said *jth* element of interest of the second category, respectively.

**12.** Computer program product comprising code instructions for executing a method, according to one of Claims 1 to 11, for associating elements of interest which are visible in a video, when said program is executed by a computer.

**13.** Storage medium which can be read by a computer device on which a computer program product comprises code instructions for executing a method, according to one of Claims 1 to 11, for associating elements of interest which are visible in a video.

**FIG. 1a-1b**

**FIG. 2**

EP 3 633 544 B1

| | |
|---|---|
| (a) | **Association** |
| (b) | **Calcul couts d'association** |
| (c) | **Réassociation** |
| (d) | **Mise à jour compteurs** |

**FIG. 3**

23

FIG. 4a

FIG. 4b

| Type | Filters | Size/Stride | Output |
|---|---|---|---|
| Convolutional | 32 | 3 × 3 | 224 × 224 |
| Maxpool | | 2 × 2/2 | 112 × 112 |
| Convolutional | 64 | 3 × 3 | 112 × 112 |
| Maxpool | | 2 × 2/2 | 56 × 56 |
| Convolutional | 128 | 3 × 3 | 56 × 56 |
| Convolutional | 64 | 1 × 1 | 56 × 56 |
| Convolutional | 128 | 3 × 3 | 56 × 56 |
| Maxpool | | 2 × 2/2 | 28 × 28 |
| Convolutional | 256 | 3 × 3 | 28 × 28 |
| Convolutional | 128 | 1 × 1 | 28 × 28 |
| Convolutional | 256 | 3 × 3 | 28 × 28 |
| Maxpool | | 2 × 2/2 | 14 × 14 |
| Convolutional | 512 | 3 × 3 | 14 × 14 |
| Convolutional | 256 | 1 × 1 | 14 × 14 |
| Convolutional | 512 | 3 × 3 | 14 × 14 |
| Convolutional | 256 | 1 × 1 | 14 × 14 |
| Convolutional | 512 | 3 × 3 | 14 × 14 |
| Maxpool | | 2 × 2/2 | 7 × 7 |
| Convolutional | 1024 | 3 × 3 | 7 × 7 |
| Convolutional | 512 | 1 × 1 | 7 × 7 |
| Convolutional | 1024 | 3 × 3 | 7 × 7 |
| Convolutional | 512 | 1 × 1 | 7 × 7 |
| Convolutional | 1024 | 3 × 3 | 7 × 7 |
| Convolutional | 1000 | 1 × 1 | 7 × 7 |
| Avgpool | | Global | 1000 |
| Softmax | | | |

**FIG. 5**

Vehicle images

Person images

Face images

CNN

Face dataset

Person dataset

Vehicle dataset

Tronc commun

Face coding

Person coding

Vehicle coding

Detection loss function

Detection loss function

Detection loss function

Face ground truth

Person ground truth

Vehicle ground truth

**FIG. 6**

Usual encoded informations
of position and category

Additional keypoints information

| X | Y | W | H | C | KPv | KPx | KPy | • • • | KPv | KPx | KPy |

V: visibility
X;Y: position coordinates

## FIG. 7a

## FIG. 7b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Fusion of Head and Full-Body Detectors for Multi-Object Trancking. **HENSCHEL ROBERTO et al.** IEEE/CVF Conférence on Computer Vision and Pattern Récognition Workshops. IEEE, 2018
- **JUNLIANG XING et al.** Multi-Object tracking through occlusions by local tracklets filtering and global tracklets association with détection respoonses. *IEEE Conférence on Computer Vision and Pattern Recognition,* 2009

- Learning Optimal Parameters for Multi-target Tracking with Contextuel Interactions. **DE WANG SHAO-FEIL et al.** International Journal of Computer Vision. Kluwer Academic Publishers, 2016, vol. 122
- **JOSEPH REDMON ; ALI FARHADI.** *YOLO9000: Better, Faster, Stronger, https://arxiv.org/abs/1612.08242*
- *Faster R-CNN: Towards Real-Time Object Détection with Region Proposal Networks, https://arxiv.org/abs/1506.01497*